# EUROPEAN PATENT SPECIFICATION

(11) **EP 1 197 906 B1**
(45) Date of publication and mention of the grant of the patent: **14.09.2005**
(21) Application number: 99973336.3
(22) Date of filing: 06.12.1999
(51) Int. Cl.: G06F 17/60, G07F 7/00, G07F 19/00

(54) **SERVICE RECEIVING ID NUMBER SETTLING SYSTEM**
BEZAHLUNGSSYSTEM VON DIENSTLEISTUNGEN BASIEREND AUF EINER KENNUMMER
SYSTEME DE PAIEMENT PAR NUMERO D'IDENTIFICATION DE SERVICES RE US

(30) Priority: 04.12.1998 WO PCT/JP98/05503
(43) Date of publication of application: 17.04.2002
(73) Proprietor: Doki, Takayuki, Tokyo 152-0003 (JP)
(72) Inventor: Doki, Takayuki, Tokyo 152-0003 (JP)
(74) Representative: Brown, Kenneth Richard
(86) International application number: PCT/JP1999/006826
(87) International publication number: WO 2000/034906

(56) References cited:
- EP-A- 0 725 376
- JP-A- 3 011 492
- JP-A- 5 063 855
- JP-A- 5 101 257
- JP-A- 7 160 791
- JP-A- 10 222 566
- JP-A- 10 302 126
- US-A- 5 249 044
- US-A- 5 668 950
- US-A- 5 673 309
- US-A- 5 761 648
- US-A- 5 845 259
- PATENT ABSTRACTS OF JAPAN vol. 1999, no. 02, 26 February 1999 (1999-02-26) & JP 10 302126 A (MEDIA GURITSUPU KK), 13 November 1998 (1998-11-13)
- TANNER R: "A NEW DIMENSION IN MARKETING" PROGRESSIVE GROCER, XX, XX, vol. 66, no. 5, 1 May 1987 (1987-05-01), pages 133-134,136, XP000567198 ISSN: 0033-0787
- Nikkei Multimedia, No.25, (Japan), Nikkei BP. K.K., (15.07.97), pages 20-21, XP002929674

## Description

### TECHNICAL FIELD

This invention concerns a service utilization ID number settlement system, and in particular a service utilization ID number settlement system enabling the utilization of services provided from a service provision device via an information terminal device, using an identification (ID) number.

### BACKGROUND ART

As one current service utilization ID number settlement system, a telephone communication service system is known whereby users can receive telephonic communication services using these ID numbers. When utilizing such a telephonic communication service system, users purchase, from a store or from a vending machine, a card bearing an ID number. This card bears an ID number, but at the time of purchase, this ID number is covered by a seal so that it cannot be seen. The user, having purchased the card, removes the seal or coating affixed over the ID number and reads the ID number.

The user first telephones an access point, determined in advance, using a public telephone or other information terminal device. An instruction to input the ID number is then transmitted from the access point, and in response the user inputs the ID number born by the card. The telephone company (operator) providing the service confirms this ID number, and in case of agreement with an ID number registered in advance by an authentication device, permits telephonic communication. The user then dials the telephone number of the other party, and can receive telephonic communication or other services. Fees for the telephonic communication services received are subtracted from a received amount (the amount of money paid to the store or vending machine at the time of card purchase by the user), provided to correspond to the ID number of the authentication device. In this way, payment processing and balance management for telephone service fees are performed by a central processing device provided by the operator.

In such a conventional service utilization ID number settlement system, even when a card or other media bearing an ID number covered with a seal is purchased by a user, prior to settlement, the card itself has merchandise value (the obligation to provide non-gratis services). That is, this media has merchandise value at the time of shipment. Hence there is the disadvantage that losses are incurred in the event that such merchandise is lost in or stolen from a store prior to purchase by users.

There is the further disadvantage that, if pamphlets or similar are issued and media bearing ID numbers are enclosed to provide various services as advertisement promotion, because the media itself has merchandise value, it cannot be distributed in advance by means of advertisement promotion.

There is also the disadvantage that, whereas in the past such media has been displayed and sold in stores in large quantities, the store must purchase the required quantities in advance, and moreover must strictly manage inventory.

Moreover, in conventional service utilization ID number settlement systems, a single service has been fixed for a single media unit. Consequently it has not been possible for users to receive a plurality of services through purchase of a single media unit, nor has it been possible to freely modify the contents of services after purchase of the media.

Japanese Patent application JP 10302126 relates to an electronic account settlement system capable of validating prepaid cards at the time of sale of the cards. The cards are to be used for purchase via the Internet.

A prepaid card is available for sale at a convenience store. The card has a password number of 10 to 16 digits and a predetermined amount is validated when the purchaser paid his charge and then the card information is read at a POS terminal of the store. The validity is notified to an account settlement center of the store. When the purchaser purchases a commodity from a virtual store via the Internet, he uses his password number for the payment. At the center, the validity is checked for the password number and the charge is settled. Subsequently, the approval of this settlement is notified to the purchaser, and the settlement is confirmed.

This invention was devised in order to eliminate the above-described disadvantages of conventional service settlement systems using ID numbers to enable service utilization. An object of this invention is to provide an improved settlement system using ID numbers which enables utilization of services offered only after payment of charges (settlement) and after an ID number is read by a settlement terminal device, without the media having any merchandise value (obligation to provide non-gratis services) at the time of ID number acquisition, that is, at the time of shipment.

### DISCLOSURE OF THE INVENTION

According to one embodiment of this invention, it is provided a service utilization ID number settlement systems which provide services based on an amount of money paid by the user in advance. This invention comprises:
1) a settlement terminal device, configured to enable the reading of an ID number recorded on prescribed media at the time of settlement of said media, the causing of input of service specification information to specify the service and the balance information equivalent to the amount paid, corresponding to the ID number, and the transmission of the ID number in association with balance information and service specification information;
2) a settlement management device, configured to enable the referencing of the ID number together with transmitted service specification information when an ID number has been transmitted from the settlement terminal device, and the transmission of the ID number and balance information to the settlement authentication device associated with the service specified by the service specification information; and,
3) at least one settlement authentication device, configured to enable the association of balance information to an ID number transmitted from the settlement management device and the storage of same, and, when there is a request for service from an information terminal device operated by a user, the judgment of whether or not service can be provided, referencing the ID number and balance information, and, when it is judged that service can be provided, the permitting of provision of service to the information terminal device, and the subtracting of an amount of money corresponding to the service amount from the balance information.

A second embodiment of this invention is applied to service utilization ID number settlement systems which provide services based on an amount of money paid by the user in advance. This invention comprises:
1) a settlement terminal device, configured to enable the reading of an ID number recorded on prescribed media at the time of settlement of said media, the causing of input of balance information equivalent to the amount paid associated with the ID number, and the transmission of the ID number in association with the balance information;
2) a settlement management device, configured to enable the validation of the ID number, association with the balance information, and storage when an ID number and balance information have been transmitted from the settlement terminal device, and, when there is a query from any settlement authentication device as to whether a specific ID number is validated, the judgment of whether the ID number is validated, and transmission of the result, together with the associated balance information; and,
3) at least one settlement authentication device, configured to enable the association of balance information to a sub-ID number and the storage of same, when there is a request for service together with a specific ID number from an information terminal device operated by a user, the judgment of whether or not the ID number coincides with a sub-ID number of with an ID number stored in the settlement management device, and, when the specific ID number does not coincide with a sub-ID number, the generation of a new sub-ID number.

As a third embodiment of this invention, there is also the following case. At the time of media settlement, a settlement terminal device reads the ID number recorded on the media, causes the input of service specification information specifying one or more services and individual balance information equivalent to the amount of money to be allocated for each specified service from amount the amount of money paid, and transmits the ID number and the associated service specification information and individual balance information to a settlement management device.

When an ID number is transmitted from the settlement terminal device, the settlement management device references the ID number together with the transmitted service specification information, and transmits, to each of the settlement authentication devices associated with the one or more services specified by the service specification information, individual balance information associated with the service specification information and the ID number.

Each settlement authentication device is configured to enable storage of individual balance information, associated with an ID number transmitted from the settlement management device.

A fourth embodiment of this invention is applied to service utilization ID number settlement systems which provide services based on an amount of money paid by the user in advance. This invention comprises:
1) a settlement terminal device, configured to enable the reading of an ID number recorded on prescribed media at the time of settlement of said media, the causing of input of balance information equivalent to the amount paid associated with the ID number, and the transmission of the ID number in association with the balance information to a settlement management device;
2) a service selection device, configured to enable the presentation of an ID number from an information terminal device operated by a user together with the receipt of service specification, and the transmission of service specification information specifying a service, together with individual balance information allocated for the service;
3) a settlement management device, configured to enable the transmission of individual balance information associated with services and the ID number to each settlement authentication device associated with one or more services specified by the service specification information, when an ID number is transmitted from the settlement terminal device and in addition service specification information and individual balance information are transmitted from the service selection device; and,
4) one or more settlement authentication devices, configured to enable the association of individual balance information with an ID number transmitted from the settlement management device and storage of same, the judgment of whether a service can be provided, referring to the ID number and individual balance information, when there is a request for service from an information terminal device operated by a user, and, when it is judged possible to provide the service, the permission of provision of the service to the information terminal device and the subtraction of an amount of money equivalent to the service amount from the individual balance information.

The relation between the media and the service may also be determined in advance. That is, this invention is a service utilization ID number settlement system for the provision of prescribed services based on an amount of money paid in advance by users, and comprising:
1) a settlement terminal device, configured to enable, at the time of settlement for prescribed media associated with a prescribed service, the reading of an ID number recorded on the media, the causing of input of balance information equivalent to the amount paid associated with the ID number, and the transmission to a settlement management device of the above ID number associated with the above balance information; and,
2) a settlement authentication device, configured to enable the storage of the above balance information associated with the above ID number when the ID number has been transmitted, when there is a request for service from an information terminal device operated by a user, the judgment of whether the service can be provided referring to the above ID number and balance information, and when it is judged that the service can be provided, the permission of provision of the service by the above information terminal device, and the subtraction of an amount of money equivalent to the service amount from the balance information.

Here, when the above settlement authentication device judges whether service can be provided or not, if the ID number has not been validated, or if the amount of money equivalent to the service amount to be provided is larger than the current balance, provision of the service is forbidden.

The following is also possible. That is, the above settlement authentication device is configured to enable storage of user-specific information which identifies the user associated with an ID number, and when a new ID number is transmitted from the settlement terminal device, user-specific information transmitted together with this new ID number is referenced, a judgment is made as to whether an ID number exists which is already registered for the same user, and, if an already-registered ID number exists, the new ID number is associated with this already-registered ID number and stored. When judging whether services can be provided or not, if the amount of money equivalent to the amount of service to be provided is larger than the sum of the balance associated with the already-registered ID number and the balance associated with the new ID number, then provision of the service is prohibited.

This invention may also be as follows. That is, a settlement authentication device is configured to enable the storage of user-specific information which identifies the user associated with an ID number; when a new ID number is transmitted from a settlement terminal device, the new ID number is referenced together with the transmitted user-specific information, and a judgment is made as to whether there exists an already-registered ID number for the same user. If there exists an already-registered ID number, the balance associated with the already-registered ID number is added to the balance associated with the new ID number, and balance information associated with the already-registered ID number is deleted.

The above media may be provided in the form of a plurality of separable bound media sheets, bearing different ID numbers.

This invention may also be as follows. That is, a service provision device which, when judging whether the above service can be provided, transmits warning information to the above information terminal device when the amount of money equivalent to the service amount to be provided, subtracted from the current balance, is less than a standard amount of money.

In addition, the above media may be a printed slip specifying the amount of money to be paid by the user, and on which is recorded information other than the above ID number; the above settlement terminal device may be capable of input of the ID number recorded on this printed slip and other information, and transmission of the input ID number and other information, as well as the fact of the user's having paid the above amount of money.

The above printed slip may be provided in a form which enables the cutting away of a plurality of printed slips from a single sheet with different ID numbers.

The above ID numbers may be different for the above media.

The above settlement terminal device may be capable of transmission of user payment information, and the settlement authentication device may, when it has received an ID number together with the above payment information, take the balance information added to the payment information as the new balance information.

ID numbers transmitted to the above settlement authentication device may be sub-ID numbers generated in association with each service.

This invention is media on which is recorded an ID number which can be used by a service utilization ID number settlement system of this invention. Here "media" refers to any object on which information is recorded by some means, configured to enable the reading of an ID number and other information by an information reading device, such as a POS terminal. For example, this includes a form bearing a barcode associated with information, a magnetic card on which information is magnetically recorded, and an IC card in which information is recorded as digital data, as well as a floppy disk capable of recording collected information. Further, when an ID number transmitted by the above settlement terminal device is associated with a different ID number within the above settlement authentication device or the above settlement management device, and is stored or transmitted, and when there is a request for service by the above information terminal device, it is also possible to configure the system such that a request can be issued using only the associated ID number. If this method is used, because the ID number transmitted by the above settlement terminal device and the ID number used by the above information terminal device are different, by hiding the ID number used at the above information terminal device by means of a seal or similar, or else by sending only to the user of the above information terminal device or taking some other measure to inform only the user, safety is maintained even if the ID number transmitted by the above settlement terminal device is learned by another party. The system may also be configured to enable the registration of a password when, separately from an ID number, the user performs settlement using a settlement terminal device, or when accessing a service authentication device or service management device. A settlement authentication device is set such that, when there is a query from a user, provision of service is permitted only when, in addition to a validated ID number, there is also matching of the password. Authentication by means of a password can apply the techniques of the prior art. In this way, after settlement safety is maintained even if other parties learn the ID number.

### BRIEF DESCRIPTION OF THE DRAWINGS

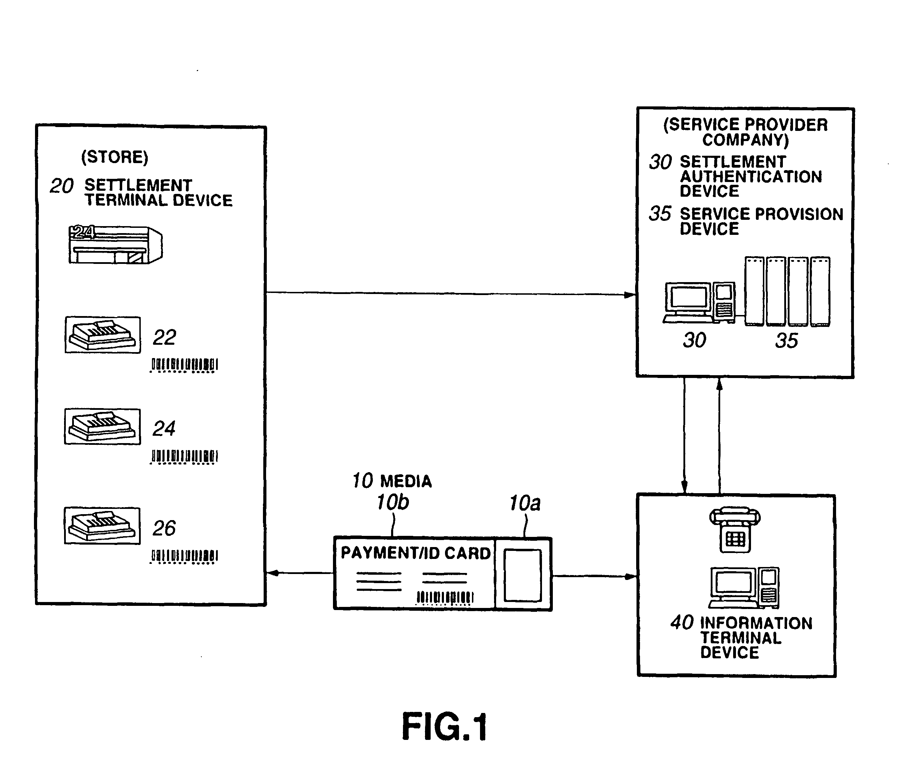

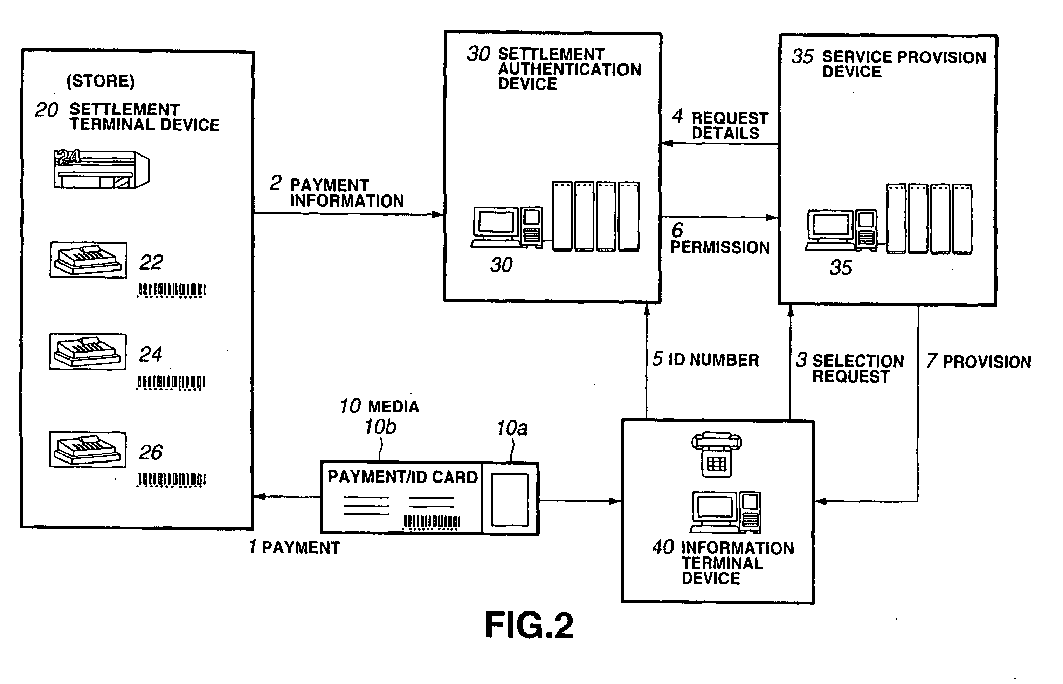

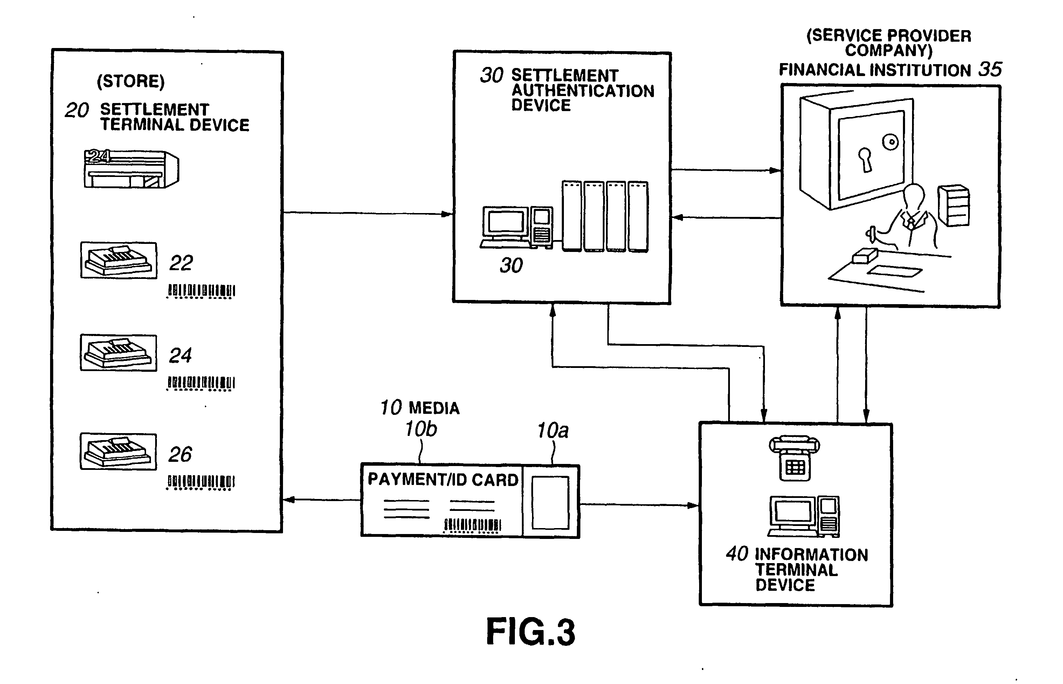

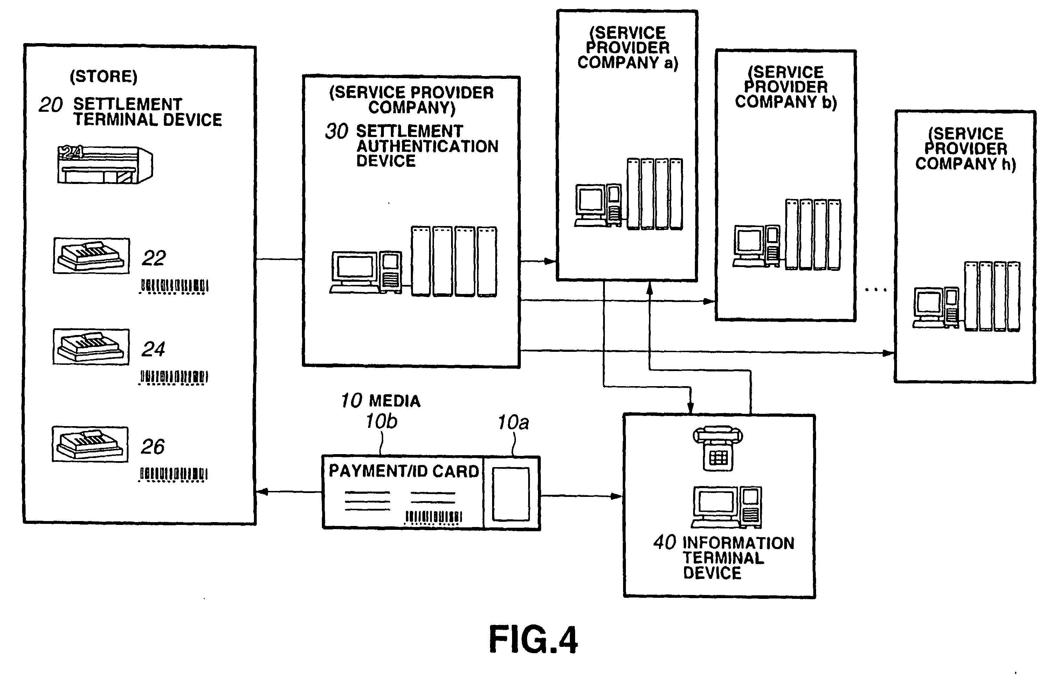

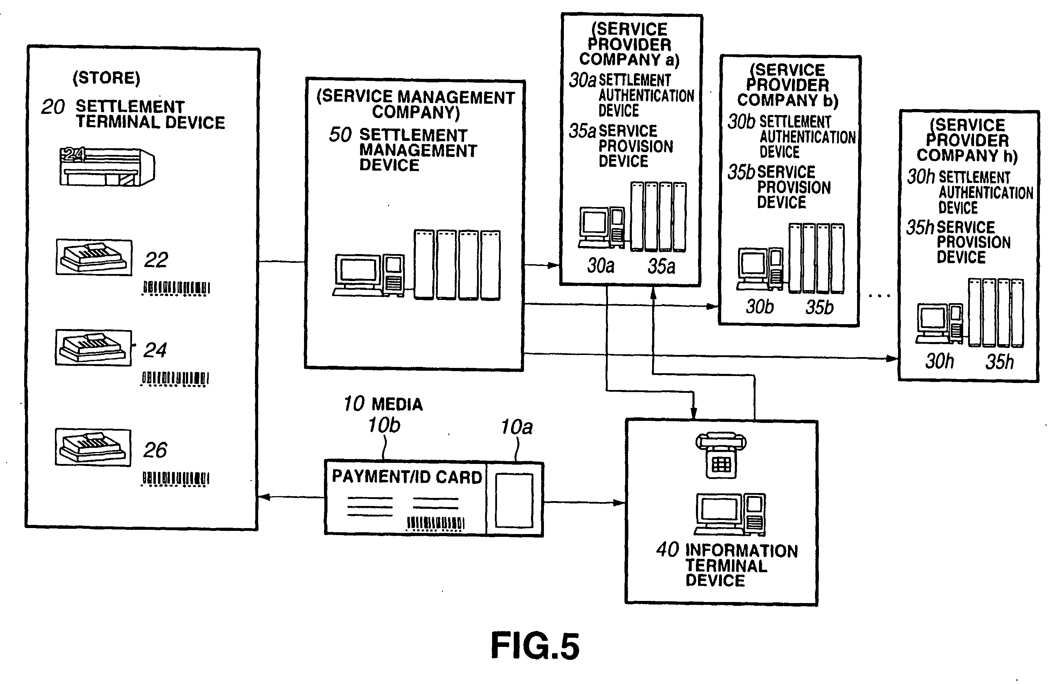

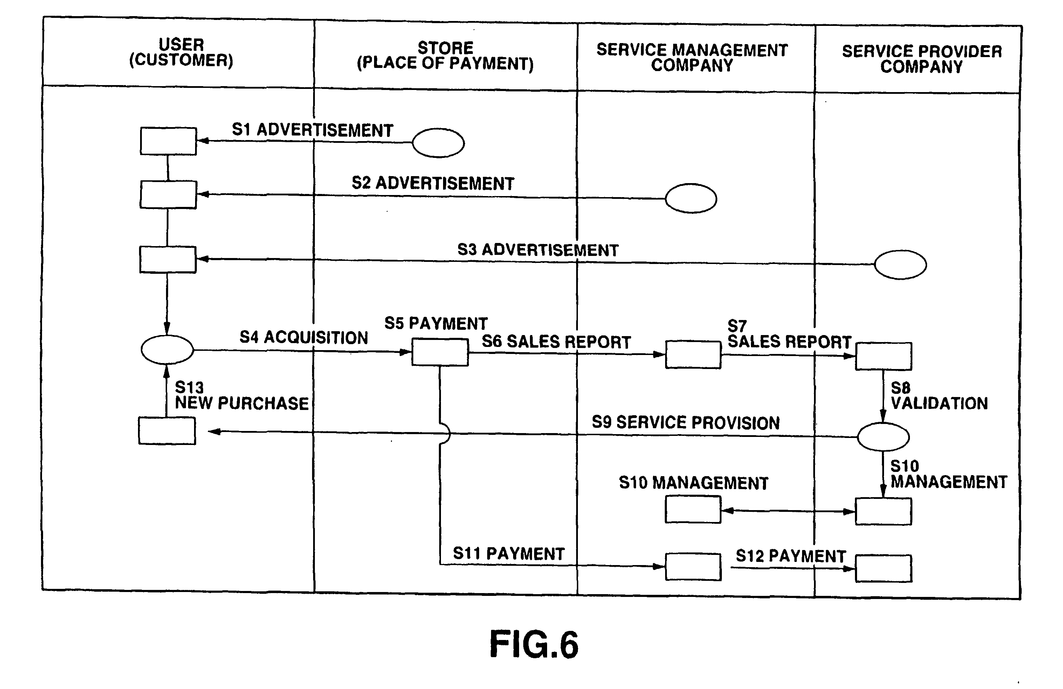

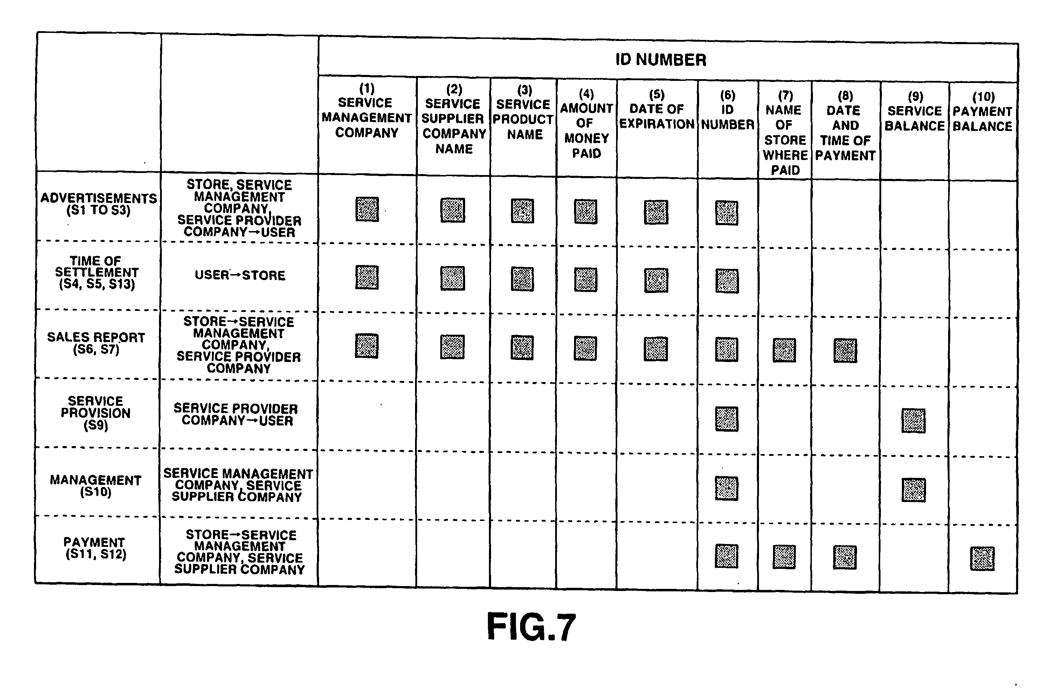

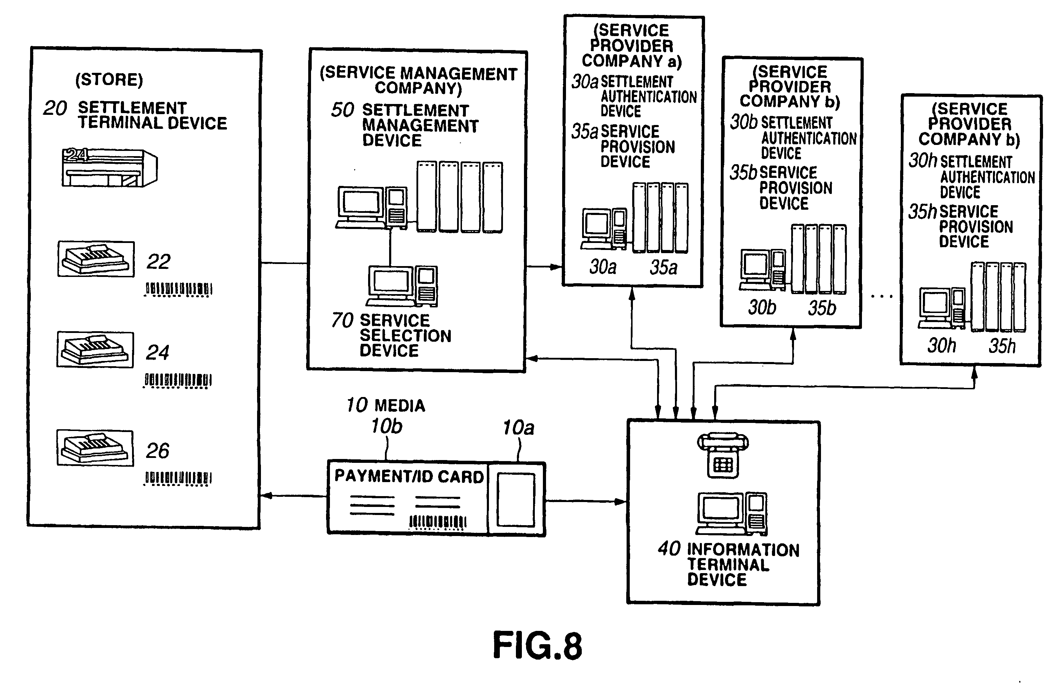

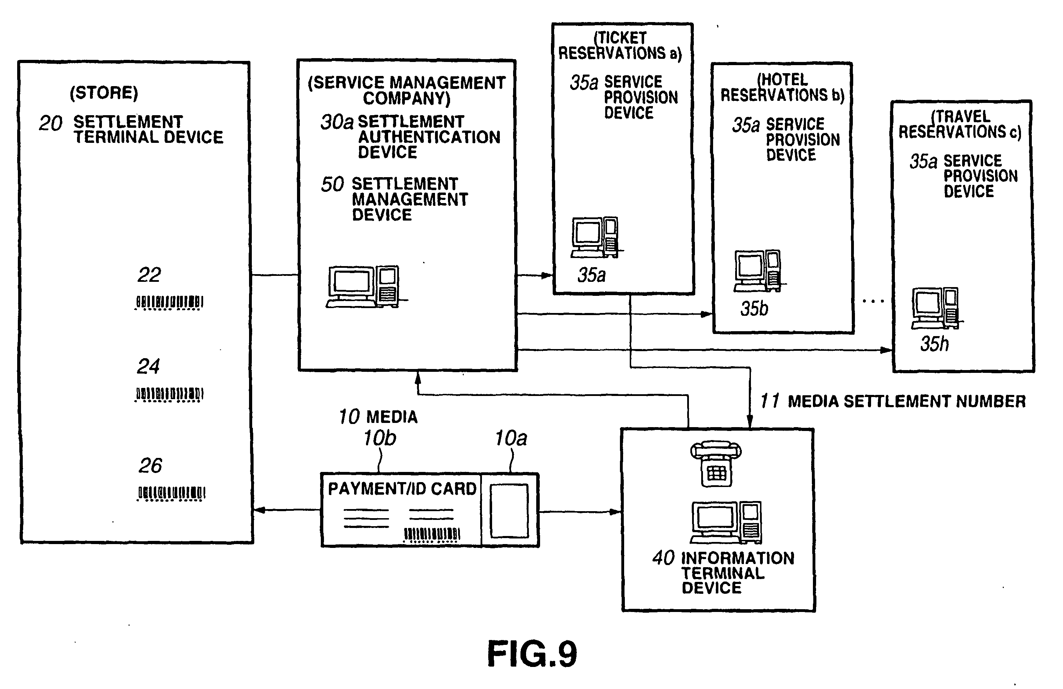

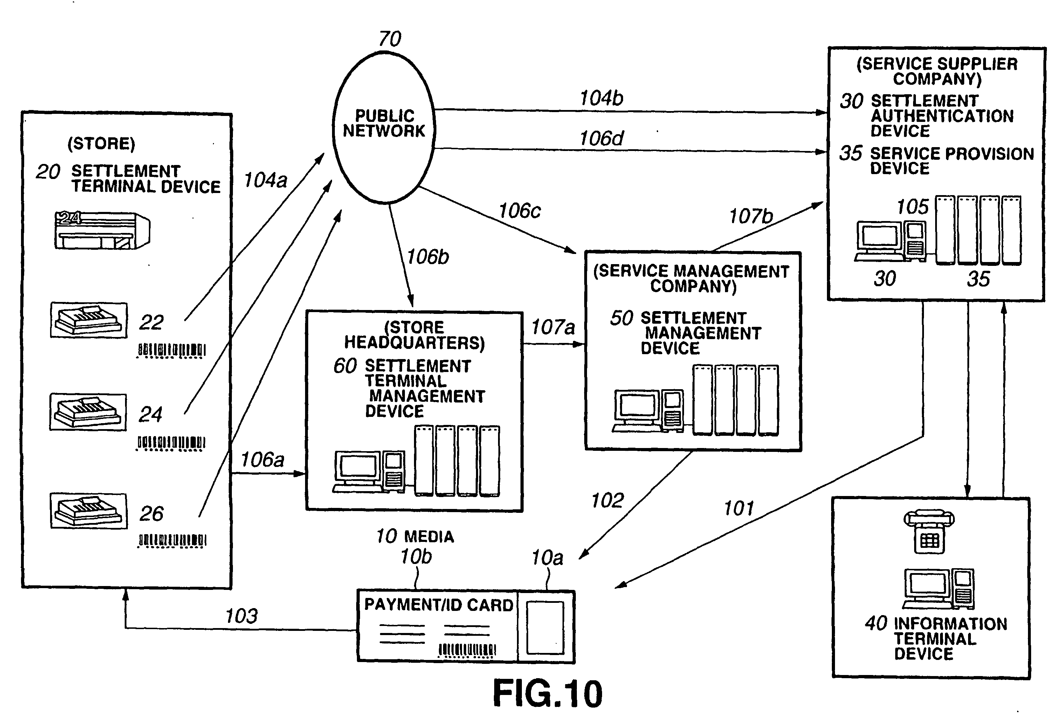

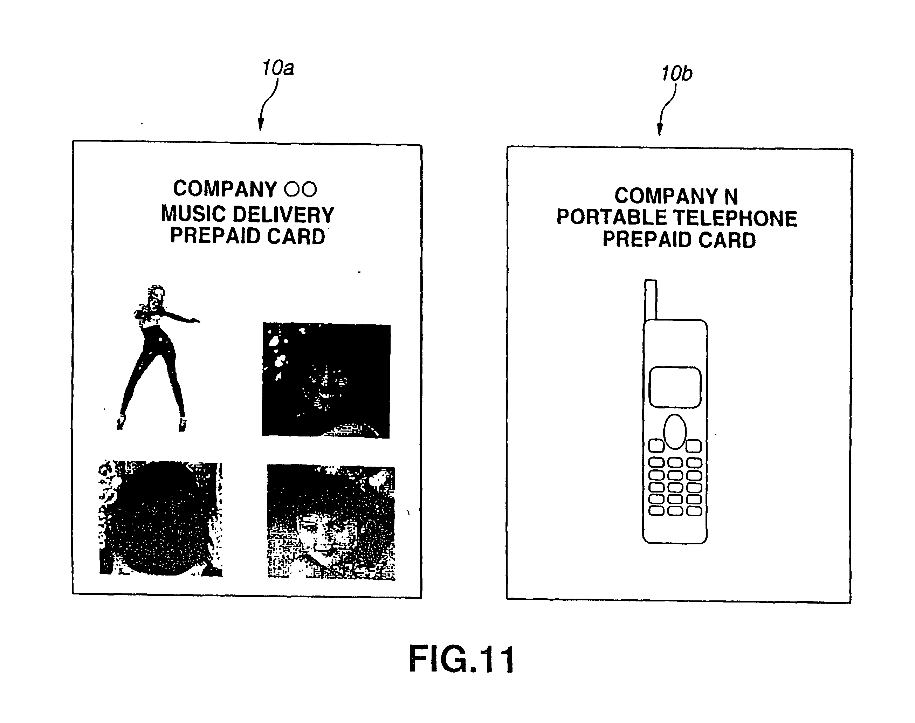

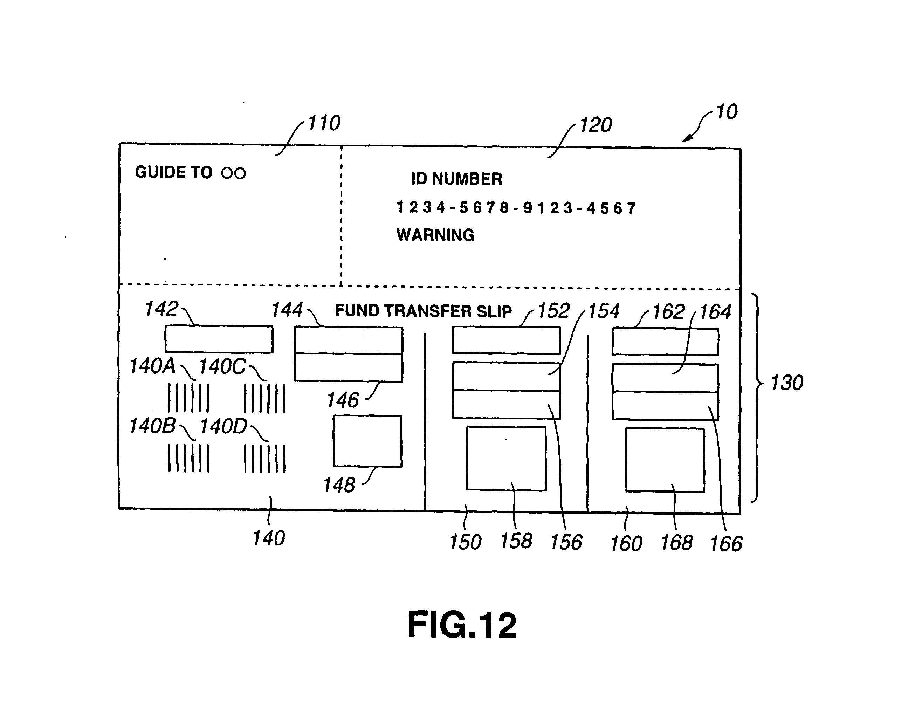

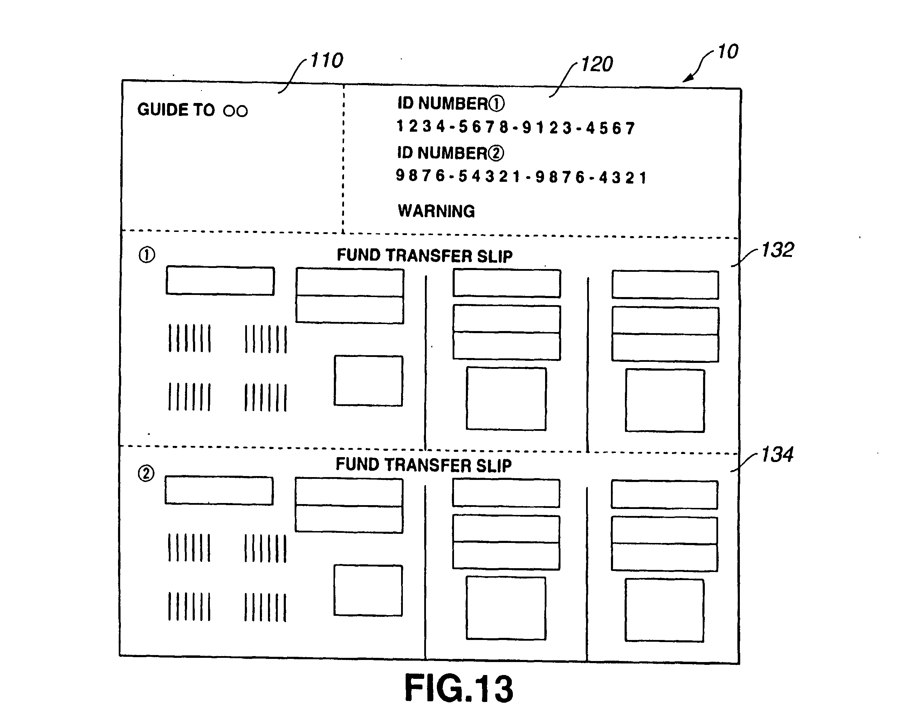

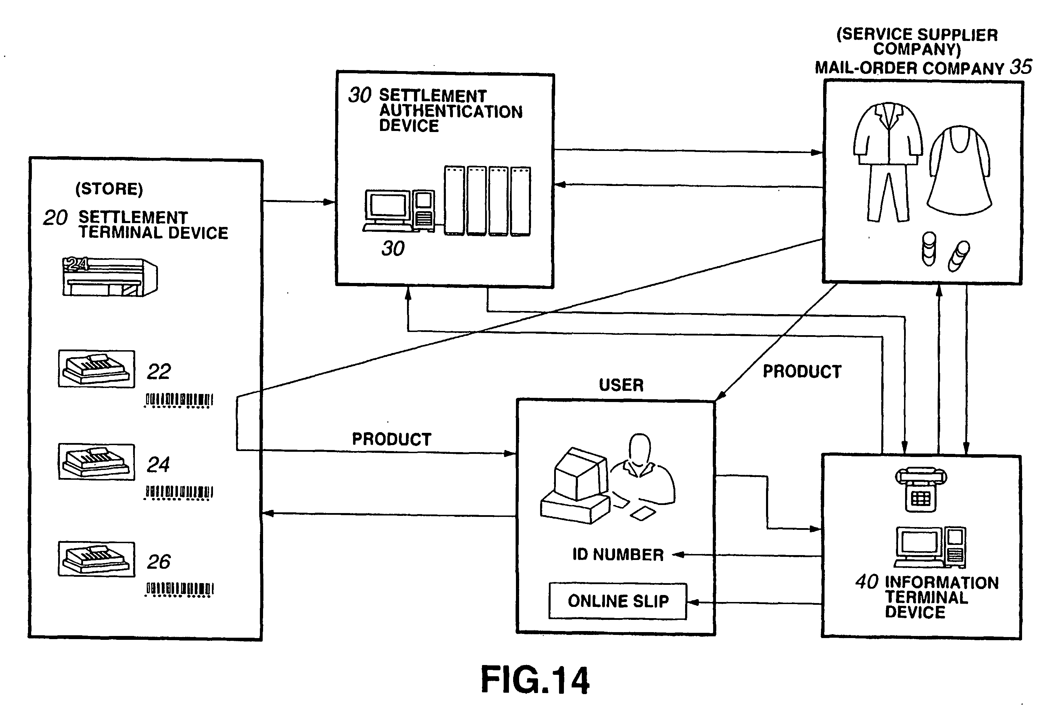

Fig. 1 is a block diagram showing the configuration of the settlement system in a first embodiment of the invention. Fig. 2 is a block diagram showing a variation of the settlement system of the first embodiment. Fig. 3 is a block diagram showing a specific example of the settlement system of the first embodiment. Fig. 4 is a block diagram showing another specific example of the settlement system of the first embodiment. Fig. 5 is a block diagram showing the configuration of the settlement system of second and third embodiments of the invention. Fig. 6 is a diagram of transaction interrelations within this settlement system. Fig. 7 is a diagram showing the information content transmitted according to the above transaction interrelation diagram. Fig. 8 is a block diagram showing the configuration of the settlement system of a fourth embodiment of the invention. Fig. 9 is a flow chart of the settlement system of the fourth embodiment of the invention. Fig. 10 is a block diagram showing the configuration of the settlement system of an embodiment to which this invention is applied. Fig. 11 is a plane view showing an example of media specifying a service. Fig. 12 is a plane view showing media of the printed slip type. Fig. 13 is a plane view showing other media of the printed slip type. Fig. 14 is a block diagram showing the configuration of a settlement system using printed slips.

### BEAST MODE FOR CURRYING OUT THE INTENTION

Below, the settlement system of this invention is explained in detail, referring to the attached drawings.

### First Embodiment

Fig. 1 is a block diagram showing a first embodiment of a service utilization ID number settlement system of this invention. This system comprises media 10, a settlement terminal device 20, a settlement authentication device 30, and a service provision device 35.

The media used in the settlement system of this invention does not, at the time of shipment or at the time of acquisition, have any merchandise value (obligation to provide non-gratis services), and is distributed together with fliers, pamphlets, catalogs and similar to users by a service provider company intending to provide various services using the media, as well as by various service management companies supporting this information provision company. Alternatively, online slips and other media can be transmitted via telephone lines or by wireless communication or other means. The media bears, at least, an ID number, and also bears a service product name, service provider company name, service management company name, or similar. The amount of money paid may be printed in advance on each media unit; in this case, the user pays an amount of money determined at time of settlement. Or, the system may be configured such that the user pays an arbitrary amount of money at time of settlement; in this case, an amount of money for payment is not printed on the media in advance. Normally, this type of information is recorded as barcode data. The information to be recorded as barcode data may be decided arbitrarily. However, if information recording is possible, an IC card, magnetic card or similar can be optionally employed. This media is normally created as a flyer, pamphlet, catalog, printed slip or similar. However, by holding the same information as that of the media within a device connected to the settlement terminal device, it is possible to render the media itself unnecessary if the ID number alone is input to the settlement terminal device.

Part of the media may be made separable. That is, the media 10, configured as part of a flyer, pamphlet, catalog or similar as shown in Fig. 1, comprises a part 10b bearing a barcode to be read by a settlement terminal device, described below, and a part 10a equivalent to a memo, printed such that at least the ID number can be recognized without using the barcode. ID numbers printed on media 10, or information enabling identification of ID numbers, are stored in the database of the settlement authentication device 30. In addition to the ID number, on the readable part 10b are printed, as barcodes or similar, the service product name, service supplier company name, service management company name, and when necessary the amount of money for payment. The part 10a equivalent to a memo can be separated from the part 10b; on it is printed, at least, the ID number, in a manner enabling easy recognition by the user. At the time of its distribution or acquisition, this media 10 integrated with fliers, pamphlets, catalogs or similar bears an ID number, but the ID number cannot be used to receive non-gratis services, and therefore the media has no merchandise value (obligation to provide non-gratis services).

Settlement terminal devices 20 normally exist in locations throughout the country, such as convenience stores, kiosks, bookstores, video rental stores, and other retail stores; they are installed in stores which are convenient for users to make settlements. The settlement terminal device 20 is capable of reading the ID number recorded on the media 10. In cases where settlement amounts and other information is recorded on the media in addition to the ID number, settlement terminal devices are configured to enable the reading and transmission of this information. Normally, POS terminal devices (sales information management systems) provided in convenience stores and other stores can be used as these settlement terminal devices. POS terminal devices currently provided in stores are widely used for payment of telephone charges, water and gas charges, and other utility fees in addition to sales of merchandise within the store. This invention utilizes the POS terminal devices which are connected to networks and used in settlement of utility fees and other bills. When using POS terminal devices 22, 24, 26 as settlement terminal devices 20, the barcode printed on the readable part 10b of the media 10 is read by an optical reading-type register or similar.

The settlement authentication device 30 is configured to enable communication with settlement terminal devices and storage of ID numbers and balance information, and may also be configured for storage of user-specific information (names, member codes and similar) which identifies users, in association with ID numbers. Communication is performed via an arbitrary network. The network may comprise public circuits or leased circuits. The settlement authentication device is installed, together with a service provision device 35, at the service provider company. However, the settlement authentication device may be installed at a remote site instead of at the service provider company. The settlement authentication device and service provision device may also be realized in the same computer hardware. Through the use of public circuits or leased circuits, the time from provision of information by settlement terminal devices 20 to the settlement authentication device 30 until execution of processing to validate use of the ID number by the settlement authentication device is such that operation is in realtime.

The service provision device 35 is configured to enable the provision of services to a terminal device 40 used by the user when accessed by the terminal device. Various types of services provided by the service provision device 35, that is, various products for account settlement, are conceivable. Settlement of bills for sale of merchandise via the Internet, of bills for sale of non-gratis content via the Internet, of fees for connection to Internet service providers, of fees for information from audio information services, of the price of tickets for entertainment, events and concerts, of the price of airline, hotel and other tickets, and of fees for membership in various fan clubs, is conceivable. Settlement of international telephone bill, portable telephone bill, and other communication service fees is also possible. In such cases, information terminal devices 40 include various communication terminals on communication circuits, and include telephone sets and communication terminals for fixed circuits for domestic communication or international communication, mobile communication circuits, and satellite circuits. After use of an ID number has been validated, a telephone set comprised by an information terminal device 40 is used to telephone a prescribed access point, and by inputting an ID number and the telephone number of the other party, an international telephone call can be made. This fee is subtracted from the payment amount area equivalent to the ID number of the settlement authentication device. As information terminal devices 40, computers, game equipment, and other communication terminals which can be used on the Internet or other networks, can be employed.

In the above configuration, processing is actually performed by the following procedure. When a user, having acquired the above media 10, attempts to receive services introduced in the pamphlet or similar, the user visits a convenience store or other store specified in advance by the service provider company. At this time the user, possessing the media 10, pays to the store the payment amount printed on the media 10. On receiving this payment, the store reads the barcode using a POS terminal device 20, as described above. The information thus read is transmitted, via public circuits or other networks, to the settlement authentication device 30. At this time, if a payment amount is also recorded on the media 10, this payment amount is also read and transmitted. In cases where the system is configured such that the payment amount is specified at the time of settlement, a store employee or the user inputs the desired payment amount into the settlement terminal device. This payment amount is associated with the ID number and transmitted.

When information indicating that payment has been made and settlement concluded reaches the settlement authentication device 30, the settlement authentication device 30 executes processing to validate use of the ID number. Various processing to validate ID numbers is conceivable; for example, validation processing may be performed in which the payment amount associated with the ID number is allocated within the settlement authentication device 30, this ID number is initially locked, and when information is transmitted from the settlement terminal device 20, the lock is canceled. Such processing for ID number validation is accompanied by processing to confirm the ID number and to confirm that payment has been made, and so may be called authentication.

When there is a request for provision of services from an information terminal device 40 operated by a user, the service provider device 35 references the ID number stored in the settlement authentication device and the payment (balance) information, and decides whether or not services can be provided. This takes the form of a query by the service provider device to the settlement authentication device for each provision of services. In addition, information relating to validated ID numbers may also be transmitted in advance to the service provider device by the settlement authentication device, in order to confirm that services are provided. When the service provider device judges that services can be provided, services are provided to the information terminal device, and update processing is performed in which an amount of money equivalent to the service amount is subtracted from the balance information stored in the settlement authentication device.

By means of this invention, at the store the user pays a fee equivalent to the amount of money printed in advance on the media, information indicating, at least, the ID number which has been read is provided by the settlement terminal device 20 to the settlement authentication device 30, and when processing to validate use of the ID number is performed by the settlement authentication device 30, the media 10 has merchandise value (an obligation to provide non-gratis services) as a prepaid card. Stated more precisely, the ID number initially printed on the media has merchandise value (an obligation to provide non-gratis services).

After validation processing (authentication) of the ID number born by this media 10, the user can use this ID number to acquire required information from a service provider device 35. If the user separates the part 10a, equivalent to a memo, from the media 10, uses an information terminal device 40 provided to receive service information from the service provider device 35, and uses the ID number printed on the part 10a equivalent to a memo to operate the information terminal device 40, then the service provider device 35 provides the required service information to the information terminal device 40.

In this way, a fee equivalent to the service ID amount which has received service is subtracted from the amount paid in advance to a store by the user, and the balance is left in the fee management area associated with the ID number in the settlement authentication device 30.

This managing of fee balances is performed within the settlement authentication device 30 in association with ID numbers. When as the result of such balance management in association with ID numbers, it is judged that the balance will be eliminated if a service is provided, the service provider device does not provide the service. Even if provision of a service is possible, if the balance falls below a reference value, the service provider device may be made such that a warning is provided to the information terminal device.

Fig. 2 shows an example in which separate businesses maintain the settlement authentication device 30 and service provider device 35. For example, a business which sells content over the Internet (service provider company) maintains a service provision device 35, and a business performing settlement authentication maintains a settlement authentication device 30. When a user pays a prescribed amount of money at a settlement terminal device 20 (arrow 1), payment information is transmitted from the settlement terminal device 20 to the settlement authentication device 30 (arrow 2). By this means, ID number validation processing is performed. At the information terminal device 40, when the user attempts to purchase content from the service provider and selects ID number settlement, a selection request is sent from the information terminal device 40 to the service provision device 35 (arrow 3), and simultaneously the user inputs an ID number to the settlement authentication device 30 (arrow 5). The service provision device 35 transmits the details of the user request and other information to the settlement authentication device 30, and the settlement authentication device 30 makes a comprehensive judgment concerning the ID number, balance information and request details, and notifies the service provision device 35 as to whether permission to purchase is possible (arrow 6). If there is notification of permission, the service provider 35 provides the content to the information terminal device 40 (arrow 7).

If the balance is zero or has been reduced, the user can increase the balance by depositing an amount of money equivalent to a payment amount at the store. This is what is called an "electronic wallet" function; funds paid by the user can be used in electronic settlements for various purposes. If the service provider is a financial institution, services of the financial institution can be received via the settlement terminal devices 20 and information terminal devices 40.

As shown in Fig. 3, if the service provider company 35 is a financial institution, it is possible to process what is called "home banking" in which the user sends money and performs similar transactions at an information terminal device 40; deposit and withdrawal of funds at the financial institution gateway is possible at a settlement terminal device 20. Here, if an authentication service company which maintains a settlement authentication device 30 is provided separately from the financial institution as the service provider company 35, the burden on the financial institution itself can be alleviated. When a user makes a deposit at a settlement terminal, the ID number and deposit amount are transmitted to the settlement authentication device 30 via the settlement terminal 20. On the other hand, if funds maintained within the user's "electronic wallet" are transferred to a third party using an information terminal device 40 or similar processing is performed, the details of this processing and ID number are transmitted to the settlement authentication device 30 and service provider 35, and if the ID number is genuine and the balance is sufficient, processing for fund transfer and deduction of a handling charge is performed by the service provider. When a user attempts to withdraw funds which have been deposited, withdrawal processing is performed at an information terminal device 40 or settlement terminal device 20, and the cash is received at a convenience store or similar, or a postal money order is received at home.

By thus converting into electronic form the point-of-access operations of a financial institution, it is possible to eliminate the storefronts of the financial institution.

In Fig. 4, when a service provider company 35 is an Internet mall consisting of a plurality of stores a, b, ..., h, by providing one authentication service company having a settlement authentication device 30 for this Internet mall, the burden on each of the stores is alleviated, and sales activities can be made more efficient. A user enjoys shopping in the Internet mall at an information terminal device 40, and purchases merchandise at one store or at a plurality of stores. Settlement is performed at a settlement terminal device 20, and after authenticating settlement, the settlement authentication device 30 notifies the relevant store or stores of the results.

The system may also be configured to enable users to transfer and add funds through settlement of media bearing a new ID number. For example, if a payment amount is supposed to be 3,000 yen, after validation of use of the ID number, usage may result in a balance of zero or an extremely small amount, in which case the user visits a store bringing new media. At the store, a settlement terminal device 20 is used to read the barcode. A payment amount is allocated to the new ID number, and usage of the new ID number is validated. At this time, the user has both the previously used ID number and a new ID number which can be used. In order to use only the old ID number, the user contacts the service provider company and requests addition of the amount of money paid for the new ID number to the old ID number. By having the settlement authentication device maintain information unique to the user, this addition processing can be made automatic. That is, the settlement authentication device is configured such that when a plurality of ID numbers are provided to the same user, transfer and addition processing are executed. In this case both the old ID number and the new ID number are validated; the system may be configured such that, and if either ID number is specified, services can be provided within the limits of the sum of the balances of both ID numbers. When a new ID number is issued, processing may also be performed to delete or otherwise render invalid the old ID number, and to transfer any balance associated with the old ID number to the new ID number. Such processing can easily be executed by the service provider company through software operations within the settlement authentication device. After such addition processing has been performed, the balance paid for the old ID number and the amount paid for the new ID number are added, and the user can use the old ID number to receive services equivalent to the sum of the paid amounts.

As a rule, a unique ID number is assigned to each media unit, and a plurality of media units do not have the same ID number. By this means it is possible to simultaneously modify the system of ID numbers as appropriate, as effective for prevention of misrepresentation and other security concerns.

By preparing media as a plurality of sheets in bound or strip form, and appending a sequence number to the ID number of the plurality of media units, the user can use a settlement terminal device 20 in a store to make payment for media with the same ID number but different sequence numbers, in order to add settlement amounts to the same ID number in the settlement authentication device.

In this way, the system is configured such that, when the balance for media used in this invention is exhausted, or becomes small, it can be again "recharged" to enable use, so that the media can also be called a "rechargeable prepaid card."

### Second Embodiment

A second embodiment of this invention concerns a configuration enabling requests for provision of services to a plurality of service provider companies using a single media unit.

Fig. 5 is a block diagram of the configuration of this second embodiment. The system shown in Fig. 5 is essentially similar to the configuration of the above first embodiment, but differs in the interpositioning, between stores having settlement terminal devices 20 and the service provider company having a settlement authentication device 30 and service provision device 35, of a service management company having a settlement management device 50.

The settlement management device 50 is interpositioned between the settlement terminal device and a plurality of service provider companies. That is, the settlement management device 50 is configured such that, when an ID number is transmitted from a settlement terminal device 20, the settlement management device 50 can reference the service specification information transmitted together with the ID number, the service provider companies a, b, c, ..., h providing the specified services can be identified, and the ID number and payment amount can be transmitted to the settlement authentication devices of the service provider companies. The service management device 50 may be provided independently to enable transmission of information to all service provider companies; or, settlement authentication devices 30a, 30b, ..., 30h may be grouped within the service management company and installed together with the settlement management device 50.

Information read from media 10 by a settlement terminal device 20 differs from the case of the system shown in Fig. 1 in that service specification information, which is data specifying types of services, must be included. That is, because a plurality of service provider companies exists, it is necessary to select the service provider company from which services are to be received. In addition to thus univocally determining a service provider company for each media unit and printing service specification information specifying the service provider company on the media, the system may also be configured to enable specification of the service by the user at a store. In this case, service specification information is not printed in advance on the media, and the system is configured such that service specification information identifying a service provider company specified by the user is input into a settlement terminal device. Service specification information is sent together with the ID number to the settlement management device 50.

Next, processing in this embodiment is explained.

First, the user acquires the media 10 placed in advertisements included in magazines, in promotional literature which is posted or passed out, or in convenience stores, or else transmits online slips or other media via telephone or wireless circuits. At a settlement terminal device (POS register) 20, 22, 24, 26 in a convenience store, funds in the amount printed in advance on the media are paid. On passing through the settlement terminal device (POS register) 20, the ID number printed on the media 10 is transmitted to the settlement management device 50 via a public circuit or other network. All information from the settlement terminal device 20 is sent to the settlement management device 50.

At the settlement management device 50, authentication of the opening of the ID number is performed. The settlement management device 50 assigns and transmits information to the service provider company, based on data identifying the type of service. For example, if there are a plurality of service provider companies which provide international telephone communication services, and settlement authentication devices 30a, 30b, ..., 30h and service provision devices 35a, 35b, ..., 35h are installed at each service provider company, information identifying the service provider company is recorded as a barcode on the media 10. A settlement terminal device 20 reads this information together with the ID number, and sends it together to the settlement management device 50. The settlement management device 50 collects information for each service provider company, for selection and transmission to the settlement authentication devices 30a, 30b, ..., 30h possessed by individual service provider companies. At the settlement authentication devices 30, opening of the transmitted ID number is authenticated.

When receiving services, a user uses an information terminal device 40 to access service provision devices 35a, 35b, ..., 35h through the access points, determined in advance, of service provision devices 35a, 35b, ..., 35h. When telephonic communication begins, responsive guidance is provided from the service provision device or settlement authentication device, and the user follows this guidance to input an ID number. The settlement authentication devices 30a, 30b, ..., 30h confirm that the ID number matches an ID number registered in advance with settlement authentication devices 30a, 30b, ..., 30h. If there is no match, service is not provided. The settlement authentication device also confirms that a balance remains; if a balance remains, telephonic communication is permitted. If the balance is insufficient, service is not provided. When provision of service is permitted, the user dials the telephone number of the other party and converses by telephone. When the telephone conversation ends, the settlement authentication devices 30a, 30b, ..., 30h subtract the number of minutes of telephone conversation used from the service amount. During telephone conversation also, the settlement authentication devices 30a, 30b, ..., 30h manage the amount of service remaining to the user and the provision of service; if the amount remaining reaches an amount determined in advance, a warning is provided to the information terminal device, through information to the effect that "The balance remaining is low." When the balance reaches zero, the service provision device terminates the provision of service.

Next, the flow of monetary settlement and the details of transmitted information are explained. Fig. 6 is a diagram of interrelations for transactions in a settlement system of the second embodiment of this invention.

A store such as a convenience store performing settlement of media (place of payment) advertises to users (customers) through storefront fliers, in-store fliers and other advertising means, in order to promote the use of this system (S1). Service management companies performing service management for this system also advertise to users, employing storefront fliers and sales promotion activities in magazines, newspapers, television, radio and other media, on streets, at event venues, and similar (S2). The service provider companies which provide services themselves conduct advertising activities as well, through storefront fliers and sales promotion activities in magazines, newspapers, television, radio and other media, on streets, at event venues, and similar (S3). Users acquire media created in this way (S4). Users bring acquired media into stores, and in the store pay an amount to settle the amount of payment (payment: S5). The store reports the sale to the service management company and service provider company (sales report: S6, S7). Based on this report, the service provider company releases the ID number in order to provide service to the user, that is, executes processing to validate use of the ID number (validation processing: S8). And, when there is a request from the user for provision of service, if the conditions for service provision are satisfied, service is provided (S9). The service provider company and service management company adjust and manage the service ID amount and payment amount according to the details of the user's ID number (management: S10). The store remits the funds paid to the service management company, and the service management company remits these to the service provider company (payment: S11, S12).

In some cases, the balance of prepaid service utilization fees is reduced, and the user may, through settlement for new media, add a new purchase amount to the user's ID number (new purchase: S13).

The service utilization ID number settlement system is operated by passing through the processes shown in this diagram of transaction interrelations.

Fig. 7 shows the details of transmitted information in the transactions of Fig. 6. At the stage in which a store, service management company and service provider company advertise to users, the media is recorded with the service management company name, service provider company name, service product name, payment amount, date of expiration, ID number, and other information. Information items can be added or removed as necessary. When the amount paid can be settled at a store, recording of the amount paid is unnecessary. When the service provider company can be determined at a store, printing of the service provider company and service product is unnecessary.

When a store makes a sales report to a service management company and service provider company, in addition to the above information, the name of the store receiving the funds settled for the media, and the date and time of payment, are also appended and transmitted. Management of services between the user and the service management company and service provider company is entirely performed based on ID numbers and service balances. When payment is made by a store to the service management company and service provider company, ID numbers, the name of the store receiving payments, payment dates and times, and payment amounts are transmitted.

This information is normally read by scanning of barcodes or similar, and is configured as digital information which can be transmitted over circuits. It is preferable that the service management company name, service provider company name, service product name, amount paid, date of expiration, and ID number be rendered as barcodes and read, in which case rendering as barcodes is based on a prescribed format. Cases in which the service management company name, service provider company name, service product name, or other items are identical are also possible.

As a variation on this embodiment, a configuration in which sub-IDs are issued by the settlement authentication device is also possible. In this case, the settlement terminal devices 20 read the ID number recorded on the media 10, and associate and transmit the ID number and balance information without specifying the service. On the other hand, when there is a request for service together with a specific ID number from an information terminal device 40, the settlement authentication device 30 at the service provider company determines whether the specific ID number is in the sub-ID numbers stored therein, and if no such number exists, queries the settlement management device 50. If this specific ID number is not registered as its own sub-ID number but is an ID number validated in the settlement management device, the settlement authentication device 30 generates a new sub-ID number, associates it with the balance information and stores it. If a balance is present, the service is provided. That is, a sub-ID number is issued when the settlement authentication device is first accessed. Subsequently, similar service provision requests of the service provider company are made by the user's presenting the sub-ID number. By means of this variation, there is the advantage that the authentication procedure can be omitted.

As shown in Fig. 11, it is also possible to issue media which specifies a service in advance, such as for example prepaid cards 10a specifically for music delivery, or prepaid cards 10b specifically for portable telephone use (specific telephone company). In this case, the ID number is itself associated with a specific service, and the user need not perform any operations to specify a service.

### Third Embodiment

A third embodiment of this invention concerns a settlement system wherein, in the above second embodiment, a plurality of service provider companies can be specified at a store.

The configuration in this embodiment is similar to that of the above second embodiment, explained in Fig. 5. However, the settlement terminal device 20 is configured such that, at the time of media settlement, in addition to reading the ID number recorded on the media, one or more service provider companies a, b, c, ..., h can be specified. At this time, separate amounts of money to be allocated to each of the service provider companies from the amount paid can be specified at the settlement terminal device. Specification of these service provider companies and specification of the individual amounts of money are performed either by the user's conveying orally to a store employee the services to be specified and the employee's entering the information via a keyboard into the settlement terminal device, or by the reading of barcodes of a list of service provider companies prepared in advance and barcodes of a list of amounts paid. The settlement terminal device may also be configured to enable a user to input this information directly, by panel or button operations. The settlement terminal device 20 issues a sub-ID number for each specified service provider company. These sub-ID numbers may be sequence numbers assigned in relation to the original ID number, or may be completely separate numbers. Data identifying the specified service provider companies is transmitted to the corresponding service management company, together with allocated payment amounts and sub-ID numbers.

When information is transmitted from a settlement terminal device, the settlement management device 50 references the service specification information transmitted together with the sub-ID number. Service provider companies specified by the service specification information are identified, and individual balance information associated with service specification information and sub-ID number are transmitted to settlement authentication device for the service provider company. If there is no hindrance to operation, the system may also be configured such that sub-ID numbers are not generated, and the same ID number is used for every service provider company.

Processing at the settlement authentication device and service provision device of a service provider company to which sub-ID numbers and other information have been transmitted is similar to that of the above first embodiment.

By means of the above third embodiment, a plurality of service provider companies, providing services can participate jointly in this settlement system. At each service provider company, when an ID number has been sent, services can be provided within the limits of funds allocated to each.

For the user, it is possible to freely specify a plurality of services in a single media settlement, for greater ease in using this settlement system. And the user can freely set allocation amounts according to the frequency of use of services, and can therefore appropriately receive services desired within the limits of the amount of money paid.

### Fourth Embodiment

A fourth embodiment of this invention concerns a settlement system which enables selection of services after media settlement.

Fig. 8 is a block diagram of the configuration of the fourth embodiment. The system shown in Fig. 8 is essentially similar to the configuration of the above second embodiment shown in Fig. 6, but differs in that, in the service management company, the settlement management device 50 comprises a service specification device 70. Processing within the settlement terminal devices 20, and within the settlement authentication devices 30 and service provision devices 35 at service provider companies, are similar to processing in the above first embodiment.

When, in this embodiment, settlement is performed using a settlement terminal device 20, the user performs settlement without specifying a service. A settlement amount may be recorded in advance on the media, or the system may be configured to enable the user to specify the amount at a store. After settlement by a user for media 10, the service management company is contacted, and the service selection device 70 is used to specify services and to specify fund amounts.

When a service selection device 70 is connected from an information terminal device 40 operated by a user, in addition to presentation of an ID number, receipt of service specifications (one or more) is also possible; it is also configured to enable transmission of service specification information, identifying services specified by the user, together with individual balance information allocated to each service. Here it is possible to select the amount of money to be allocated to each specified service.

When an ID number is transmitted from a settlement terminal device 20, and moreover service specification information and individually specified balance information are transmitted from a service selection device 70, the settlement management device 50 generates a sub-ID number for each service. The settlement management device 50 is further configured to enable transmission, to the settlement authentication devices 30 of service provider companies specified by the service specification information, individual balance information and the sub-ID number corresponding to the service specification information.

Each of the service provider companies a, b, c, ..., h executes processing conforming to the above embodiment based on the sub-ID number. However, in cases where no hindrance arises from use of the same ID number, the same ID number may be used by each service supply company.

The settlement system of this embodiment can be applied to ticket purchase and reservation deposit settlement systems for utilization of concert, hotel, air travel, and other services. Fig. 9 is a block diagram of such a settlement system. In this processing, the settlement management device 50 is supposed to be configured so as to include the settlement authentication device 30.

First, the user pays the amount of money (paid amount) printed in advance on the media 10 from the settlement terminal 20 of a convenience store. On passing through the settlement terminal device (POS register) 20, the ID number printed on the media 10 is transmitted to the settlement management device 50 via a public circuit or other network. At the settlement management device 50, processing is performed as a settlement authentication device, and opening of an ID number is authenticated.

Next, the user designates to the settlement management device 50 a service provider company, by telephone or over the Internet, the ID number printed on the media is input, and a settlement number is received. On the day of use, the user brings to the service company gateway the media 11 on which the settlement number is recorded and registered, and receives service. The media 11 with settlement number recorded and registered can also be acquired via mail or as an online slip; it can also be acquired and presented as a floppy disk, portable terminal ID, IC card, or other digital media. In this case, the digital media is read at the service provider company gateway, entailing the installation of a device able to recognize settlement numbers.

To explain Fig. 9 in further detail, the user first pays a prescribed amount of money at the settlement terminal device 20, and the ID number of the media 10 is validated. When a reservation is made with a hotel (of the service provider devices 35a, 35b, ..., 35h, for example, 35a) from an information terminal device 40, the settlement authentication device 30a judges whether the reservation is accepted or not, and the service provision device 35a is notified of the judgment result. At this time, the service provision device 35a notifies the information terminal device 40 of a settlement number 11. If reservations are made with a plurality of hotels, the user acquires a settlement number for each hotel.

On the day of lodging, the user brings the media to the front desk of the hotel, and informs the hotel of the settlement number received for that hotel. At the time of reckoning, a service amount equivalent to the service received by the customer is subtracted from the amount already settled, to adjust accounts. If the adjusted amount is smaller than expected, and a payment amount remains for the media, the media is carried over to the next hotel reservation, or a refund is provided on the spot. If the adjusted amount exceeds the paid amount for the media, the user pays the difference.

A settlement method similar to the procedure explained above can of course also be applied to the payment of fees for the purchase of airline tickets and of tickets for entertainment, events, concerts and similar.

### Working Examples

Fig. 10 is a drawing showing an example of a settlement system according to the above second embodiment, together with the system flow of processing. In this example, a settlement terminal management device 60 is newly provided for batch management of information from settlement terminal devices 20; this management device 60 is installed in the headquarters of a convenience store chain when the stores are convenience stores. In essence, it is the same as the system in Fig. 6.

First, a service provider company having a service provision device 30 issues media 10 attached to pamphlets in order to encourage use of the service (step 101). This media 10 is issued and distributed by the service management company having the service management device 50 in addition to the service provider company (step 102). On acquiring this media 10, a user pays a fee at a store in which a settlement terminal device 20 is installed (step 103). The real payment information read by POS 22, 24, 26 is transmitted via a public network 70 to a service provider company having a settlement authentication device 30 and to a service management company (steps 104a, 104b). Based on this real payment information, the settlement authentication device 30 executes processing to validate usage of the card (step 105). When an additional amount of money is subsequently paid, processing to increase the balance is also performed within the settlement authentication device 30, based on real payment information from a settlement terminal device 20. Such processing to increase balances and update ID numbers can also be performed via a service management company having a settlement management device 50. Communication between stores and the store headquarters (S106a, S106b), communication between the store headquarters and the service management company (S107a), and communication between the service management company and a service provider company (S107b), are bidirectional communications via a public network 70.

Fig. 12 shows an example of a printed slip used as the media 10. The printed slip 10 may, for example, be mailed as a result of a request at an Internet web site. This slip 10 displays an ID number; when a prescribed amount of money is paid at a convenience store or similar, the ID number and any other necessary information, as well as the fact that a deposit has been made, are transmitted from the POS terminal to the settlement authentication device 30, and subsequently the ID number is validated.

The slip 10 is provided with an explanatory part 110 on which is printed instructions for use, an ID number part on which are printed the ID number and precautions regarding use of the ID number, and a slip part 130. Similarly to an ordinary bank fund transfer slip, the slip part 130 comprises a slip part for submission to headquarters 140, a slip part for store use 150, and a receipt part 160; on the slip part for submission to headquarters 140 are printed the store number, date of expiration and other necessary information by means of the barcodes 140A, 140B, 140C, 140D. At the settlement terminal device 20, these barcodes are read and settlement processing performed. On the slip part for submission to headquarters 140 are provided a user space 142 for identification of the user, an amount space 144 displaying the amount of money paid, a recipient space 146 indicating the recipient, and a stamp space 148 in which the date of receipt is stamped. The slip part for store use 150 is provided with an amount space 152 showing the amount of money paid, a user space 154 identifying the user, a recipient space 156 indicating the recipient, and a stamp space 158 in which the date of receipt is stamped. The receipt part 160 is provided with a user space 162 identifying the user, a recipient space 164 indicating the recipient, an amount space 166 indicating the amount of money paid, and a stamp space 168 in which the date of receipt is stamped.

Fig. 13 shows a variation on the slip of Fig. 10. This slip 10 is provided with two slip parts 132, 134 in a single sheet; the ID number part 120 displays two ID numbers corresponding to the slip parts 132, 134. In this way, by providing a plurality of slip parts 132, 134 in a single slip sheet, the recipient can perform processing for fund transfer a plurality of times while requiring only one mailing process, and the user can also suitably select the amount of money for transfer.

The slips of Fig. 12 and Fig. 13 are distributed to users through the mail or by other means as printed matter, or can be online slips which are printed from an information terminal device 40. Instead of taking the form of a slip, an ID number displayed on an information terminal device 40 can itself be taken to be the media.

Fig. 14 shows a settlement system which uses an online slip 10 and ID number itself as the media. In this example, the service provider company 35 is a mail-order company. The user accesses an information terminal 40, and via the information terminal 40 selects a product of the mail-order company 35. Next, as the payment method, an online slip or an ID number is selected, and an online slip or ID number is obtained at the information terminal 40. Then the user transmits the ID number, or the ID number of the online slip and other information, to the settlement authentication device 30 as well. Thereafter the user employs the ID number or online slip to settle payment at a settlement terminal device 20. This information is transmitted to the settlement authentication device 30, and after authentication, the mail-order company 35 is notified of the settlement result. Based on this, the mail-order company 35 supplies the product to the user. The product is either supplied directly from the mail-order company 35 via a physical distribution company, or else transfers the product to the user at a convenience store or similar having a settlement terminal device 20.

In each of the above embodiments, there is a demarcation into settlement terminal device, service management device, service selection device, settlement authentication device, and service provision device; but there is no need whatsoever for such separation, and it is sufficient that, from the standpoint of function, the operations of each of these devices are effected. That is, one or more of these devices may be realized in the same device; these devices may be further divided into more functionally specific devices; and devices other than these, organized to provide comparable functions, may be used.

### INDUSTRIAL APPLICABILITY

This invention concerns a settlement system employing a prepaid method in which an ID number becomes valid at the time of settlement of product payment and the right to receive services ensues; it can be used in service systems to provide a variety of services, such as international telephone and other communication services, product sales using the Internet, sale of non-gratis content over the Internet, information services from Internet service providers, audio information services, remittance of membership fees, and sale of event tickets and airline tickets.

## Claims

1. A service utilization ID number settlement system for the provision of services based on an amount of money paid in advance by a user, and comprising:
a settlement terminal device (20), configured so as to read, at the time of settlement for prescribed media (10), an ID number recorded on the media (10), to cause the input of balance information equivalent to the amount of money paid in association with the ID number, and to transmit said ID number in association with said balance information;
one or more settlement authentication devices (30), configured so as to store ID numbers transmitted from a settlement management device (50) in association with said balance information; when there is a request for service from an information terminal device (40) operated by a user, to judge whether service can be provided, referring to said number and balance information; and, when it is judged that service can be provided, to permit provision of service to said information terminal device, and to subtract from the balance information an amount of money equivalent to the service amount;
**characterised in that**:-
the settlement terminal device (20) is configured to input service specification information specifying a service in association with the ID number, and to transmit said ID number in association with the service specification information;
and **in that** the system further comprises said settlement management device (50), configured so as to reference said service specification information when an ID number is transmitted from said settlement terminal device (20), and to transmit the ID number and balance information to a settlement authentication device (30) associated with the service specified by the service specification information.

2. A service utilization ID number settlement system according to claim 1, wherein:
said settlement terminal device (20) reads, at the time of settlement for the media (10), the ID number recorded on said media (10), causes the input of service specification information specifying one or more service and individual balance information equivalent to amounts of money allocated to each service specified from the paid amount, and transmits to said settlement management device (50) the ID number in association with said service specification information and said individual balance information;
when an ID number is transmitted from said settlement terminal device (20), said settlement management device (50) references the service specification information transmitted together with the ID number, and transmits, to each settlement authentication device associated with the one or more services specified by the service specification information, the ID number and individual balance information associated with the service specification information; and,
each of said settlement authentication devices (30) is configured to be able to store an ID number transmitted from said settlement management device (50) in association with said individual balance information.

3. A service utilization ID number settlement system according to claim 1 or 2, wherein the settlement management device (50) is configured to validate the ID number, when an ID number and balance information are transmitted from said settlement terminal device (20), and to store the ID number in association with the balance information, and, when there is a query from any settlement authentication device (30) as to whether a specific ID number is validated, the settlement management device (50) is configured to judge as to whether said ID number is validated, and to transmit the result together with the associated balance information; and wherein the one or more settlement authentication devices (30) are configured to store sub-ID numbers in association with balance information; to judge, when there is a request for service together with a specific ID number from an information terminal device operated by a user, as to whether service can be provided according to whether the specific ID number matches said sub-ID number or an ID number stored in said settlement management device; and, to generate a new sub-ID number when the specific ID number does not match a sub-ID number.

4. A service utilization ID number settlement system according to claim 1, 2 or 3, the system further comprising a service selection device, configured so as to receive an ID number as well as service specification from an information terminal device operated by a user, and to transmit service specification information specifying the service together with individual balance information allocated to the service;
wherein the settlement management device (50) is configured to transmit, when an ID number has been transmitted from said settlement terminal device (20) and in addition thereto said service specification information and individual balance information have been transmitted from said service selection device, individual balance information and the ID number corresponding to service specification information to each of the settlement authentication devices (30) corresponding to the one or more services specified by the service specification information;
and wherein the one or more settlement authentication devices (30) are configured to store ID numbers transmitted from said settlement management device (50) in association with said individual balance information; to judge, when there is a request for service from an information terminal device operated by a user, as to whether service can be provided, referring to said ID number and individual balance information; and when it is judged that service can be provided, to permit provision of service to said information terminal device, and to subtract from said individual balance information an amount of money equivalent to the service amount.

5. The service utilization ID number settlement system according to any of claims 1 to 4, wherein, when judging whether said service can be provided, if the ID number has not been validated, or the amount of money equivalent to the service amount to be provided is smaller than the current balance, said settlement authentication device (30) prohibits the provision of the service.

6. The service utilization ID number settlement system according to claim 5, wherein:
said one or more settlement authentication devices (30) are configured to store user-specific information identifying the user associated with said ID number;
when a new ID number is issued, the user-specific information associated with the new ID number is referenced, a judgement is made as to whether there exists an ID number already registered for the same user, and if there exists an ID number already registered, the new ID number is associated with the already-registered ID number and stored, and the new ID number is validated; and,
when a judgement is made as to whether said service can be provided, if the amount of money equivalent to the service amount to be provided is larger than the sum of the balance associated with the already-registered ID number and the balance associated with the new ID number, provision of the service is prohibited.

7. The service utilization ID number settlement system according to claim 5, wherein:
said one or more settlement authentication devices (30) are configured to store user-specific information identifying the user associated with said ID number; and,
when a new ID number is issued, the user-specific information associated with the new ID number is referenced, a judgement is made as to whether there exists and ID number already registered for the same user, and if there exists an ID number already registered, the balance associated with the already-registered ID number is added to the balance associated with the new ID number, the new ID number is validated, and the balance information associated with the already-registered ID number is deleted.

8. The service utilization ID number settlement system according to claim 7, wherein said media (10) is supplied in the form of a plurality of separable sheets, bearing different ID numbers.

9. The service utilization ID number settlement system according to any of claims 1 to 8, wherein, when judging whether said service can be provided, if the current balance less the amount of money equivalent to the service amount to be provided is smaller than a reference amount of money, said one or more settlement authentication devices (30) cause the transmission of warning information to said information terminal device (40).

10. The service utilization ID number settlement system according to any of claims 1 to 9, wherein:
said media (10) is a slip on which are recorded said ID number and other information, and which specifies the amount of money to be paid by the user; and,
the settlement terminal device (20) can input the ID number recorded on the slip and other information, and can transmit the input ID number and other information, and the fact that the user has paid said amount of money.

11. The service utilization ID number settlement system according to claim 10, wherein said slip is supplied in the form of a plurality of slips on a single sheet, bearing different ID numbers, and which can be cut away.

12. The service utilization ID number settlement system according to claims 3 or 4, wherein the ID number used in said one or more settlement authentication devices (30) are a sub-ID number generated in association with each service.

13. The service utilization ID number settlement system according to any of claims 1 to 12, wherein said ID number is different for each of said media units.

14. The service utilization ID number settlement system according to any of claims 1 to 13, wherein:
the settlement terminal device (20) can transmit user deposit information, and
when said deposit information is received together with an ID number, the one or more settlement authentication devices (30) set the result of addition of the deposit information to the balance information as the new balance information.

15. The service utilization ID number settlement system according to any of claims 1 to 14, wherein said media (10) comprises an online slip.

16. The service utilization ID number settlement system according to claim 15, wherein the online slip is printed from an information terminal device (40).

17. The service utilization ID number settlement system according to any of claims 1 to 14, wherein the media comprises an information terminal adapted to display the ID number.

## Patentansprüche

1. Abrechnungssystem für die Nutzung von Dienstleistungen auf der Basis einer Kennnummer zur Erbringung von Dienstleistungen auf der Grundlage eines von einem Benutzer im Voraus gezahlten Geldbetrages, wobei das System Folgendes umfasst:
eine Abrechnungsterminalvorrichtung (20), die so konfiguriert ist, dass sie zum Zeitpunkt der Abrechnung für ein bestimmtes Medium (10) eine auf dem Medium (10) enthaltene Kennnummer liest; dass sie die Eingabe von Saldoinformationen veranlasst, die dem Geldbetrag entsprechen, welcher im Zusammenhang mit der Kennnummer bezahlt wurde; und dass sie die Kennnummer im Zusammenhang mit den Saldoinformationen übermittelt;
eine oder mehrere Abrechnungsauthentifizierungsvorrichtungen (30), die so konfiguriert sind, dass sie Kennnummern speichern, die von einer Abrechnungsverwaltungsvorrichtung (50) im Zusammenhang mit den Saldoinformationen übermittelt werden; dass sie, wenn von einer durch einen Benutzer bedienten Informationsterminalvorrichtung (40) eine Dienstleistungsanforderung ausgeht, anhand der Kennnummer und der Saldoinformationen feststellen, ob die Dienstleistung erbracht werden kann; und dass sie, wenn festgestellt wurde, dass die Dienstleistung erbracht werden kann, die Erbringung der Dienstleistung an die Informationsterminalvorrichtung gestatten und von den Saldoinformationen einen Geldbetrag abziehen, der dem Dienstleistungsumfang entspricht;
**dadurch gekennzeichnet, dass**
die Abrechnungsterminalvorrichtung (20) so konfiguriert ist, dass sie Dienstleistungsspezifizierungsinformationen eingibt, die eine Dienstleistung im Zusammenhang mit der Kennnummer spezifizieren, und dass sie die Kennnummer im Zusammenhang mit den Dienstleistungsspezifizierungsinformationen übermittelt;
und dass das System des Weiteren die Abrechnungsverwaltungsvorrichtung (50) umfasst, die so konfiguriert ist, dass sie auf die Dienstleistungsspezifizierungsinformationen zugreift, wenn eine Kennnummer von der Abrechnungsterminalvorrichtung (20) übermittelt wird, und dass sie die Kennnummer und die Saldoinformationen zu einer Abrechnungsauthentifizierungsvorrichtung (30) übermittelt, die der Dienstleistung, welche durch die Dienstleistungsspezifizierungsinformationen spezifiziert wird, zugeordnet ist.

2. Abrechnungssystem für die Nutzung von Dienstleistungen auf der Basis einer Kennnummer nach Anspruch 1, wobei:
die Abrechnungsterminalvorrichtung (20) zum Zeitpunkt der Abrechnung für das Medium (10) die auf dem Medium (10) enthaltene Kennnummer liest; die Eingabe von Dienstleistungsspezifizierungsinformationen, die eine oder mehrere Dienstleistungen spezifizieren, sowie von individuellen Saldoinformationen, die Geldbeträgen entsprechen, welche jeder einzelnen, anhand des gezahlten Betrages spezifizierten Dienstleistung zugeordnet sind, veranlasst; und die Kennnummer im Zusammenhang mit den Dienstleistungsspezifizierungsinformationen und die individuellen Saldoinformationen an die Abrechnungsverwaltungsvorrichtung (50) übermittelt;
die Abrechnungsverwaltungsvorrichtung (50) auf die zusammen mit der Kennnummer übermittelten Dienstleistungsspezifizierungsinformationen zugreift, wenn eine Kennnummer von der Abrechnungsterminalvorrichtung (20) übermittelt wird, und die Kennnummer und die individuellen Saldoinformationen, die den Dienstleistungsspezifizierungsinformationen zugeordnet sind, an jede Abrechnungsauthentifizierungsvorrichtung übermittelt, die der einen oder den mehreren Dienstleistungen zugeordnet ist, welche durch die Dienstleistungsspezifizierungsinformationen spezifiziert werden; und
jede der Abrechnungsauthentifizierungsvorrichtungen (30) so konfiguriert ist, dass sie eine Kennnummer speichern kann, die von der Abrechnungsverwaltungsvorrichtung (50) im Zusammenhang mit den individuellen Saldoinformationen übermittelt wird.

3. Abrechnungssystem für die Nutzung von Dienstleistungen auf der Basis einer Kennnummer nach Anspruch 1 oder 2, wobei die Abrechnungsverwaltungsvorrichtung (50) so konfiguriert ist, dass sie die Kennnummer validiert, wenn eine Kennnummer und Saldoinformationen von der Abrechnungsterminalvorrichtung (20) übermittelt werden, und dass sie die Kennnummer im Zusammenhang mit den individuellen Saldoinformationen speichert, und wobei die Abrechnungsverwaltungsvorrichtung (50) so konfiguriert ist, dass sie bei einer Anfrage von einer Abrechnungsauthentifizierungsvorrichtung (30), ob eine bestimmte Kennnummer validiert ist, feststellt, ob die Kennnummer validiert ist, und das Ergebnis zusammen mit den zugehörigen Saldoinformationen übermittelt; und wobei die eine oder mehreren Abrechnungsauthentifizierungsvorrichtungen (30) so konfiguriert sind, dass sie Unter-Kennnummern im Zusammenhang mit Saldoinformationen speichern; dass sie, wenn von einer durch einen Benutzer bedienten Informationsterminalvorrichtung eine Dienstleistungsanforderung zusammen mit einer bestimmten Kennnummer ausgeht, anhand einer Übereinstimmung oder Nichtübereinstimmung der bestimmten Kennnummer mit der Unter-Kennnummer oder einer in der Abrechnungsverwaltungsvorrichtung gespeicherten Kennnummer feststellen, ob die Dienstleistung erbracht werden kann; und dass sie eine neue Unter-Kennnummer generieren, wenn die bestimmte Kennnummer nicht mit einer Unter-Kennnummer übereinstimmt.

4. Abrechnungssystem für die Nutzung von Dienstleistungen auf der Basis einer Kennnummer nach Anspruch 1, 2 oder 3, wobei das System des Weiteren eine Dienstleistungsauswahlvorrichtung umfasst, die so konfiguriert ist, dass sie von einer durch einen Benutzer bedienten Informationsterminalvorrichtung eine Kennnummer und eine Dienstleistungsspezifizierung empfängt, und dass sie Dienstleistungsspezifizierungsinformationen, welche die Dienstleistungen spezifizieren, zusammen mit individuellen Saldoinformationen, die der Dienstleistung zugeordnet sind, übermittelt;
wobei die Abrechnungsverwaltungsvorrichtung (50) so konfiguriert ist, dass sie individuelle Saldoinformationen und die Kennnummer, die Dienstleistungsspezifizierungsinformationen entspricht, an jede der Abrechnungsauthentifizierungsvorrichtungen (30), die der einen oder den mehreren Dienstleistungen entsprechen, welche durch die Dienstleistungsspezifizierungsinformationen spezifiziert wurden, übermittelt, wenn von der Abrechnungsterminalvorrichtung (20) eine Kennnummer übermittelt wurde und zusätzlich dazu von der Dienstleistungsauswahlvorrichtung die Dienstleistungsspezifizierungsinformationen und individuellen Saldoinformationen übermittelt wurden; und wobei die eine oder die mehreren Abrechnungsauthentifizierungsvorrichtungen (30) so konfiguriert sind, dass sie Kennnummern speichern, die von der Abrechnungsverwaltungsvorrichtung (50) im Zusammenhang mit den individuellen Saldoinformationen übermittelt wurden; dass sie, wenn von einer durch einen Benutzer bedienten Informationsterminalvorrichtung eine Dienstleistungsanforderung ausgeht, anhand der Kennnummer und der individuellen Saldoinformationen feststellen, ob die Dienstleistung erbracht werden kann; und dass sie, wenn festgestellt wurde, dass die Dienstleistung erbracht werden kann, die Erbringung der Dienstleistung an die Informationsterminalvorrichtung gestatten und von den individuellen Saldoinformationen einen Geldbetrag abziehen, der dem Dienstleistungsumfang entspricht.

5. Abrechnungssystem für die Nutzung von Dienstleistungen auf der Basis einer Kennnummer nach einem der Ansprüche 1 bis 4, wobei die Abrechnungsauthentifizierungsvorrichtung (30) die Erbringung der Dienstleistung untersagt, wenn bei der Feststellung, ob die Dienstleistung erbracht werden kann, die Kennnummer nicht validiert wurde oder der Geldbetrag, der dem zu erbringenden Dienstleistungsumfang entspricht, kleiner ist als der aktuelle Saldo.

6. Abrechnungssystem für die Nutzung von Dienstleistungen auf der Basis einer Kennnummer nach Anspruch 5, wobei:
die eine oder die mehreren Abrechnungsauthentifizierungsvorrichtungen (30) so konfiguriert sind, dass sie benutzerspezifische Informationen speichern, die den Benutzer, welcher der Kennnummer zugeordnet ist, identifizieren;
- wenn eine neue Kennnummer ausgegeben wird - auf die benutzerspezifischen Informationen, die der neuen Kennnummer zugeordnet sind, zugegriffen wird; festgestellt wird, ob eine Kennnummer existiert, die bereits auf denselben Benutzer registriert ist, und wenn eine bereits registrierte Kennnummer existiert, die neue Kennnummer der bereits registrierten Kennnummer zugeordnet und gespeichert wird, und die neue Kennnummer validiert wird; und
die Erbringung der Dienstleistung untersagt wird, wenn bei der Prüfung, ob die Dienstleistung erbracht werden kann, festgestellt wird, dass der Geldbetrag, der dem zu erbringenden Dienstleistungsumfang entspricht, größer ist als die Summe des Saldos, welcher der bereits registrierten Kennnummer zugeordnet ist, und des Saldos, welcher der neuen Kennnummer zugeordnet ist.

7. Abrechnungssystem für die Nutzung von Dienstleistungen auf der Basis einer Kennnummer nach Anspruch 5, wobei:
die eine oder die mehreren Abrechnungsauthentifizierungsvorrichtungen (30) so konfiguriert sind, dass sie benutzerspezifische Informationen speichern, die den Benutzer, welcher der Kennnummer zugeordnet ist, identifizieren; und
- wenn eine neue Kennnummer ausgegeben wird - auf die benutzerspezifischen Informationen, die der neuen Kennnummer zugeordnet sind, zugegriffen wird; festgestellt wird, ob eine Kennnummer existiert, die bereits auf denselben Benutzer registriert ist, und wenn eine bereits registrierte Kennnummer existiert, der Saldo, welcher der bereits registrierten Kennnummer zugeordnet ist, dem Saldo zugeschlagen wird, welcher der neuen Kennnummer zugeordnet ist; und die Saldoinformationen, die der bereits registrierten Kennnummer zugeordnet sind, gelöscht werden.

8. Abrechnungssystem für die Nutzung von Dienstleistungen auf der Basis einer Kennnummer nach Anspruch 7, wobei das Medium (10) in Form mehrerer voneinander trennbarer Bögen vorliegt, die verschiedene Kennnummern tragen.

9. Abrechnungssystem für die Nutzung von Dienstleistungen auf der Basis einer Kennnummer nach einem der Ansprüche 1 bis 8, wobei die eine oder die mehreren Abrechnungsauthentifizierungsvorrichtungen (30) die Übermittlung von Warninformationen an die Informationsterminalvorrichtung (40) veranlassen, wenn bei der Prüfung, ob die Dienstleistung erbracht werden kann, festgestellt wird, dass der aktuelle Saldo minus dem Geldbetrag, der dem zu erbringenden Dienstleistungsumfang entspricht, kleiner ist als ein Referenzgeldbetrag.

10. Abrechnungssystem für die Nutzung von Dienstleistungen auf der Basis einer Kennnummer nach einem der Ansprüche 1 bis 9, wobei:
das Medium (10) ein Kupon ist, auf dem sich die Kennnummer und weitere Informationen befinden und der den Geldbetrag spezifiziert, den der Benutzer zu zahlen hat; und
die Abrechnungsterminalvorrichtung (20) die auf dem Kupon befindliche Kennnummer und weitere Informationen eingeben kann und die eingegebene Kennnummer und die eingegebenen weiteren Informationen sowie den Umstand, dass der Benutzer den Geldbetrag bezahlt hat, übermitteln kann.

11. Abrechnungssystem für die Nutzung von Dienstleistungen auf der Basis einer Kennnummer nach Anspruch 10, wobei der Kupon in Form mehrerer Kupons auf einem einzelnen Bogen vorliegt, die verschiedene Kennnummern tragen und von dem Bogen abgetrennt werden können.

12. Abrechnungssystem für die Nutzung von Dienstleistungen auf der Basis einer Kennnummer nach Anspruch 3 oder 4, wobei die Kennnummer, die in der einen oder den mehreren Abrechnungsauthentifizierungsvorrichtungen (30) verwendet wird, eine Unter-Kennnummer ist, die im Zusammenhang mit jeder Dienstleistung generiert wird.

13. Abrechnungssystem für die Nutzung von Dienstleistungen auf der Basis einer Kennnummer nach einem der Ansprüche 1 bis 12, wobei die Kennnummer für jede der Medieneinheiten verschieden ist.

14. Abrechnungssystem für die Nutzung von Dienstleistungen auf der Basis einer Kennnummer nach einem der Ansprüche 1 bis 13, wobei:
die Abrechnungsterminalvorrichtung (20) Benutzereinzahlungsinformationen übertragen kann und
- wenn die Einzahlungsinformationen zusammen mit einer Kennnummer erhalten werden - die eine oder die mehreren Abrechnungsauthentifizierungsvorrichtungen (30) das Ergebnis der Addition der Einzahlungsinformationen zu den Saldoinformationen als die neuen Saldoinformationen festlegt.

15. Abrechnungssystem für die Nutzung von Dienstleistungen auf der Basis einer Kennnummer nach einem der Ansprüche 1 bis 14, wobei das Medium (10) einen Online-Kupon umfasst.

16. Abrechnungssystem für die Nutzung von Dienstleistungen auf der Basis einer Kennnummer nach Anspruch 15, wobei der Online-Kupon von einer Informationsterminalvorrichtung (40) ausgedruckt wird.

17. Abrechnungssystem für die Nutzung von Dienstleistungen auf der Basis einer Kennnummer nach einem der Ansprüche 1 bis 14, wobei das Medium einen Informationsterminal umfasst, der dafür konfiguriert ist, die Kennnummer anzuzeigen.

## Revendications

1. Système d'établissement de numéro d'identification d'utilisation de service pour la fourniture de services basés sur une quantité d'argent payée à l'avance par un utilisateur, et comprenant :
un dispositif de terminal d'établissement (20), configuré de manière à lire, au moment de l'établissement pour un support prescris (10), un numéro d'identification enregistré sur le support (10), pour provoquer l'entrée d'une information de solde équivalente à la quantité d'argent payée en association avec le numéro d'identification, et pour transmettre ledit numéro d'identification en association avec ladite information de solde ;
un ou plusieurs dispositifs d'authentification d'établissement (30), configurés pour stocker des numéros d'identification transmis par un dispositif de gestion d'établissement (50) en association avec ladite information de solde, lorsqu'il y a une demande de service provenant d'un dispositif de terminal d'information (40) utilisé par un utilisateur, pour déterminer si un service peut être fourni, en se référant audit numéro d'identification et à ladite information de solde, et, lorsqu'il est déterminé que le service peut être fourni, pour permettre la fourniture du service audit dispositif de terminal d'information, et pour soustraire de l'information de solde une somme d'argent équivalente au prix du service ;
**caractérisé en ce que** :
le dispositif de terminal d'établissement (20) est configuré pour entrer une information de spécification de service qui spécifie un service en association avec le numéro d'identification, et pour transmettre ledit numéro d'identification en association avec l'information de spécification de service ;
et **en ce que** le système comprend en outre ledit dispositif de gestion d'établissement (50), configuré de manière à référencer ladite information de spécification de service quand un numéro d'identification est transmis par ledit dispositif de terminal d'établissement (20), et à transmettre le numéro d'identification et l'information de solde à un dispositif d'authentification d'établissement (30) associé au service spécifié par l'information de spécification de service.

2. Système d'établissement de numéro d'identification d'utilisation de service selon la revendication 1, dans lequel :
ledit dispositif de terminal d'établissement (20) lit, au moment de l'établissement pour le support (10), le numéro d'identification enregistré sur ledit support (10), provoque l'entrée d'une information de spécification de service qui spécifie un ou plusieurs services et d'une information de solde individuel équivalente aux sommes d'argent attribuées à chaque service spécifié à partir de la somme payée, et transmet audit dispositif de gestion d'établissement (50) le numéro d'identification en association avec ladite information de spécification de service et ladite information de solde individuel ;
lorsqu'un numéro d'identification est transmis par ledit dispositif de terminal d'établissement (20), ledit dispositif de gestion d'établissement (50) référence l'information de spécification de service transmise en même temps que le numéro d'identification, et transmet, à chaque dispositif d'authentification d'établissement associé au ou aux service(s) spécifié(s) par l'information de spécification de service, le numéro d'identification et l'information de solde individuel associés à l'information de spécification de service ; et
chacun desdits dispositifs d'authentification d'établissement (30) est configuré pour être capable de stocker un numéro d'identification transmis par ledit dispositif de gestion d'établissement (50) en association avec ladite information de solde individuel.

3. Système d'établissement de numéro d'identification d'utilisation de service selon la revendication 1 ou 2, dans lequel le dispositif de gestion d'établissement (50) est configuré pour valider le numéro d'identification, quand un numéro d'identification et une information de solde sont transmis par ledit dispositif de terminal d'établissement (20), et pour stocker le numéro d'identification en association avec l'information de solde, et, quand il y a une demande provenant de n'importe quel dispositif d'authentification d'établissement (30) pour savoir si un numéro d'identification spécifique est validé, le dispositif de gestion d'établissement (50) est configuré pour déterminer si ledit numéro d'identification est validé, et pour transmettre le résultat en même temps que l'information de solde associée, et dans lequel le ou les dispositifs d'authentification d'établissement (30) sont configurés pour stocker des sous-numéros d'identification en association avec l'information de solde, pour déterminer, lorsqu'il y a une demande de service en même temps qu'un numéro d'identification spécifique provenant d'un dispositif de terminal d'information utilisé par un utilisateur, si le service peut être fourni en fonction de la concordance ou non du numéro d'identification spécifique avec ledit sous-numéro d'identification ou un numéro d'identification stocké dans ledit dispositif de gestion d'établissement, et pour produire un nouveau sous-numéro d'identification lorsque le numéro d'identification spécifique ne concorde pas avec un sous-numéro d'identification.

4. Système d'établissement de numéro d'identification d'utilisation de service selon la revendication 1, 2 ou 3, le système comprenant en outre un dispositif de sélection de service, configuré de manière à recevoir un numéro d'identification ainsi qu'une spécification de service d'un dispositif de terminal d'information utilisé par un opérateur, et à transmettre une information de spécification de service qui spécifie le service ainsi qu'une information de solde individuel attribuée au service ;
dans lequel le dispositif de gestion d'établissement (50) est configuré pour transmettre, quand un numéro d'identification a été transmis par ledit dispositif de terminal d'établissement (20) et qu'en outre ladite information de spécification de service et l'information de solde individuel ont été transmises par ledit dispositif de sélection de service, l'information de solde individuel et le numéro d'identification correspondant à l'information de spécification de service à chacun des dispositifs d'authentification d'établissement (30) correspondant au ou aux service(s) spécifié(s) par l'information de spécification de service ;
et dans lequel le ou les dispositifs d'authentification d'établissement (30) sont configurés pour stocker les numéros d'identification transmis par ledit dispositif de gestion d'établissement (50) en association avec ladite information de solde individuel, pour déterminer, quand il y a une demande de service provenant d'un dispositif de terminal d'information utilisé par un utilisateur, si le service peut être fourni, en se référant audit numéro d'identification et à l'information de solde individuel, et quand il est déterminé que le service peut être fourni, pour permettre la fourniture du service audit dispositif de terminal d'information, et pour soustraire de ladite information de solde individuel une somme d'argent équivalente au prix du service.

5. Système d'établissement de numéro d'identification d'utilisation de service selon l'une quelconque des revendications 1 à 4, dans lequel, lorsqu'il est déterminé si ledit service peut être fourni, si le numéro d'identification n'a pas été validé, ou que la quantité d'argent équivalente au prix du service à fournir est inférieure au solde courant, ledit dispositif d'authentification d'établissement (30) empêche la fourniture du service.

6. Système d'établissement de numéro d'identification d'utilisation de service selon la revendication 5, dans lequel :
lesdits un ou plusieurs dispositifs d'authentification d'établissement (30) sont configurés pour stocker une information spécifique à l'utilisateur qui identifie l'utilisateur associé audit numéro d'identification ;
quand un nouveau numéro d'identification est délivré, l'information spécifique à l'utilisateur associée au nouveau numéro d'identification est référencée, une détermination est faite pour savoir s'il existe un numéro d'identification déjà inscrit pour le même utilisateur, et s'il existe un numéro d'identification déjà inscrit, le nouveau numéro d'identification est associé au numéro d'identification déjà inscrit puis mémorisé, et le nouveau numéro d'identification est validé ; et
lorsqu'une détermination est faite pour savoir si ledit service peut être fourni, si la quantité d'argent équivalente au prix du service à fournir est supérieure à la somme du solde associé au numéro d'identification déjà inscrit et du solde associé au nouveau numéro d'identification, la fourniture du service est empêchée.

7. Système d'établissement de numéro d'identification d'utilisation de service selon la revendication 5, dans lequel :
lesdits un ou plusieurs dispositifs d'authentification d'établissement (30) sont configurés pour stocker une information spécifique à l'utilisateur qui identifie l'utilisateur associé audit numéro d'identification ; et
quand un nouveau numéro d'identification est délivré, l'information spécifique à l'utilisateur associée au nouveau numéro d'identification est référencée, une détermination est faite pour savoir s'il existe un numéro d'identification déjà inscrit pour le même utilisateur, et s'il existe un numéro d'identification déjà inscrit, le solde associé au numéro d'identification déjà inscrit est ajouté au solde associé au nouveau numéro d'identification, le nouveau numéro d'identification est validé, et l'information de solde associée au numéro d'identification déjà inscrit est effacée.

8. Système d'établissement de numéro d'identification d'utilisation de service selon la revendication 7, dans lequel ledit support (10) est fourni sous la forme d'une pluralité de feuilles séparables portant des numéros d'identification différents.

9. Système d'établissement de numéro d'identification d'utilisation de service selon l'une quelconque des revendications 1 à 8, dans lequel, lorsqu'il est déterminé si ledit service peut être fourni, si le solde courant moins la quantité d'argent équivalente au prix du service à fournir est inférieur à une quantité d'argent de référence, lesdits un ou plusieurs dispositifs d'authentification d'établissement (30) provoquent la transmission d'une information d'alerte audit dispositif de terminal d'information (40).

10. Système d'établissement de numéro d'identification d'utilisation de service selon l'une quelconque des revendications 1 à 9, dans lequel :
ledit support (10) est une fiche sur laquelle sont enregistrés ledit numéro d'identification et d'autres informations, et qui précise la somme d'argent devant être payée par l'utilisateur ; et
le dispositif de terminal d'établissement (20) peut entrer le numéro d'identification enregistré sur la fiche et d'autres informations, et peut transmettre le numéro d'identification et les autres informations entrées, et le fait que l'utilisateur a payé ladite somme d'argent.

11. Système d'établissement de numéro d'identification d'utilisation de service selon la revendication 10, dans lequel ladite fiche est fournie sous la forme d'une pluralité de fiches sur une seule feuille, portant différents numéros d'identification, et qui peuvent être séparées.

12. Système d'établissement de numéro d'identification d'utilisation de service selon la revendication 3 ou 4, dans lequel le numéro d'identification utilisé dans lesdits un ou plusieurs dispositifs d'authentification d'établissement (30) est un sous-numéro d'identification généré en association avec chaque service.

13. Système d'établissement de numéro d'identification d'utilisation de service selon l'une quelconque des revendications 1 à 12, dans lequel ledit numéro d'identification est différent pour chacun desdits supports unitaires.

14. Système d'établissement de numéro d'identification d'utilisation de service selon l'une quelconque des revendications 1 à 13, dans lequel :
le dispositif de terminal d'établissement (20) peut transmettre une information de versement d'utilisateur, et
quand ladite information de versement est reçue en même temps qu'un numéro d'identification, lesdits un ou plusieurs dispositifs d'authentification d'établissement (30) mettent le résultat de l'addition de l'information de versement à l'information de solde en tant que nouvelle information de solde.

15. Système d'établissement de numéro d'identification d'utilisation de service selon l'une quelconque des revendications 1 à 14, dans lequel ledit support (10) comprend une fiche en ligne.

16. Système d'établissement de numéro d'identification d'utilisation de service selon la revendication 15, dans lequel la fiche en ligne est imprimée à partir d'un dispositif de terminal d'information (40).

17. Système d'établissement de numéro d'identification d'utilisation de service selon l'une quelconque des revendications 1 à 14, dans lequel le support comprend un terminal d'information adapté pour afficher le numéro d'identification.
